# EUROPEAN PATENT APPLICATION

(11) **EP 1 418 677 A2**
(43) Date of publication of application: **12.05.2004**
(21) Application number: 03254032.0
(22) Date of filing: 25.06.2003
(51) Int. Cl.: H04B 1/20

(54) **Audio system with selection of items based on user reactions**

(30) Priority: 25.06.2002 US 180900
(71) Applicant: BOSE CORPORATION, Framingham, Massachusetts 01701-9168 (US)
(72) Inventor: Zamir, Lee, MA 02139 (US); Moon, Richard, Framlingham, MA 01701-9168 (US); Martin, Keith D., MA 01747 (US); Greenberger, Hal P., MA 01757 (US)
(74) Representative: Brunner, Michael John

(57) **Abstract**

In some specific implementations, tracks of music make up a body of tracks available for playing. Metadata about the track may indicate relationships among the tracks, for example that they are jazz. Information about explicit and implicit reactions of a user to the playing of one or more of the tracks is stored. All of the available tracks are scored either directly as a result of the user reaction information or based on the relationships of the tracks to one another. The scoring is updated every time a user provides explicit or implicit reaction to a played track. Tracks are selected automatically for play based on the ratings or scores at the time of the selection and on a probabilistic technique that assures that every track has some possibility of being played at any time.

## Description

This invention description relates to selection of items based on user reactions.

For items that are tracks of music on a compact disc, for example, some CD players enable a user to indicate his preference by programming a sequence in which the tracks are to be played. When one track ends, the CD player selects the next track based on the programmed sequence.

Some music playing devices and software allow a user to indicate a preference for a type of music, jazz for example, and the device or software will play items of music of the selected type.

In one proposed system, a selection is made of a next track to be played based on rating information provided by a user. One system provides a thumbs up/thumbs down interface for a user to indicate his preferences. Another system selects music items to be played based on preferences indicated by a listening audience on a thumbs up/thumbs down interface. Some systems offer an automatic play list feature in which music items are selected for play based on user answers to questions that indicate preferences for types of music. At least one online merchant infers a user's tastes based on music purchased by the user.

In other cases, the items to be selected are features of a software application or files used by the software application. The user expresses his preference by using the features or the files. In Microsoft Word, for example, recently used files are selected by the application for display in a recently used files list on a drop down menu, and only recently used features (for example, an outlining feature) are selected for display on drop down menus for possible invocation by a user.

### SUMMARY

In general, in one aspect, the invention features a method that includes providing a user interface for controlling an audio system in a vehicle, the user interface exposing available features that provide and/or receive information concerning operation of the audio system, and altering the availability of at least one of the features depending on a motion state of the vehicle.

Implementations of the invention may include one or more of the following features. The available features both provide and receive information concerning operation of the audio system. The operation of the audio system includes a choice of audio items to be played based on reactions of the user. The user interface features include a way for the user to indicate his reactions about audio items. Fewer features are made available when the vehicle is moving than when it is stopped. The features include sub-features related to user reactions to audio items to be played, and fewer of the user reaction sub-features are provided when the vehicle is moving than when it is stopped. The sub-features related to user reactions include indicating a level of favorable or unfavorable reaction to an audio item and controlling configuration of software that uses the indications of reaction to determine audio items to be played. The features include displaying to the user, when the vehicle is not moving, a state of a configuration of the audio system. The features include receiving information about whether or not a user likes an audio item being played. The user interface include at least one of voice recognition and voice synthesis.

In general, in another aspect, the invention features apparatus that includes an audio system in a vehicle, the audio system having a user interface that includes input devices and/or output devices to provide and/or receive information concerning operation of the audio system, the level of information that is provided and/or received being altered depending on a motion state of the vehicle.

Implementations of the invention may include one or more of the following features. The user interface includes both input devices and output devices that both provide and receive information. The audio system includes a selector to choose audio items to be played based on reactions of users expressed through the user interface. The user interface includes a way for the user to indicate his reactions about audio items. Less information is made available when the vehicle is moving than when it is stopped. The level of information includes an indication of favorable or unfavorable reaction to an audio item. The level of information includes, when the vehicle is not moving, a state of a configuration of the audio system. The user interface includes at least one of voice recognition and voice synthesis.

In general, in another aspect, the invention features apparatus that includes a set of manually operable user controls for an audio, video, or multimedia system, the set including at least one transport control and at least one reaction control for the user to indicate a reaction to an audio, video, or multimedia item being played, the reaction control and the transport control being clustered within a space that is accessible by a human finger without hand motion.

Implementations of the invention may include one or more of the following features. The set of controls includes at least two transport controls each transport control permitting the user to switch from one audio, video, or multimedia item to another. The set of controls includes at least two reaction controls for the user to indicate different reactions to an item of content being played. The set of controls includes exactly two reaction controls, permitting the user to indicate a positive or negative reaction to an item being played. The set includes manual push buttons. One of the reaction controls includes a control to indicate a positive reaction to an item being played. One of the reaction controls includes a control to indicate a negative reaction to an item being played. One of the transport controls includes a forward control to indicate that the audio, video, or multimedia system should play a new item. One of the transport controls includes a backward control to indicate that the audio, video, or multimedia system should play a previous item of content. There are two reaction controls arranged opposite one another and two transport controls arranged opposite one another. A line connecting the two reaction controls is perpendicular to a line connecting the two transport controls. The two reaction controls are arranged vertically and the two transport controls are arranged horizontally. There are two reaction controls to indicate respectively a positive reaction and a negative reaction, and the two reaction controls are configured to provide respective tactile sensations corresponding to positive and negative human reactions. The positive reaction control is larger than the negative reaction control. The positive reaction control is positioned above the negative reaction control. All of the controls include round buttons.

In general, in another aspect, the invention features apparatus that includes four push buttons in a cluster, two of the buttons lying one above another for a user to indicate positive or negative reaction to an item of audio, video, or multimedia content being played, and the other two buttons lying side by side for the user to indicate that a next or previous item of audio, video, or multimedia content should be played next.

Implementations of the invention may include one or more of the following features. The buttons are round. The upper reaction button is larger than the lower reaction button. The upper reaction button has a depressed contour and the lower reaction button has a raised contour. The four buttons are clustered to be reachable by a finger of a hand without moving the hand. The cluster has a circular perimeter. A support holds the cluster on a steering wheel of a vehicle.

In general, in another aspect, the invention features apparatus that includes at least two controls for a user to indicate respectively different reactions to an item of audio, video, or multimedia content being played, the two controls providing different tactile impressions to the user. The tactile differences include sizes of the controls. The tactile differences include relative positions of the two controls. The tactile differences include respective surface contours of the controls. The two controls also bear different visible indicia representative of the different reactions. The visible indicia include a plus sign and a minus sign. The visible indicia include a thumbs up and a thumbs down. The visible indicia include the text "more like" and "less like" or synonymous text.

In general, in another aspect, the invention features apparatus that includes stored presets representing reactions to items of audio, video, or multimedia content to be played by an audio, video, or multimedia system, and circuitry to receive a selection of one of the presets and to generate a probabilistic play sequence of items based on the selected preset.

Implementations of the invention may include one or more of the following features. Each of the presets is based on a history of items played. Each of the presets is associated with one user. At least some of the users are each associated with at least two of the presets. Each of the presets is updated based on items played. Each of the presets is updated as determined by the user. Each of the presets is associated with a name.

In general, in another aspect, the invention features a method that includes (a) receiving from a user a selection from among presets representing reactions to items of audio, video, or multimedia content previously played by an audio, video, or multimedia system, (b) selecting an item to play based on the selected preset, and (c) modifying the preset based on a reaction to the selected item. The user selection is from among presets associated with the user. The user selection is from among presets associated with other users. The preset is updated at times determined by the user. The preset is updated every time a new item is played.

In general, in another aspect, the invention features apparatus that includes (a) a user interface for an audio, video, or multimedia system, the user interface including at least one control that enables a user to provide reaction information in connection with the playing of items of audio, video, or multimedia content, (b) stored presets representing reactions of the user for items of audio, video, or multimedia content previously played by the audio, video, or multimedia system, the reaction control also providing an additional function of enabling the user to apply the presets to the playing of items of audio, video, or multimedia content by the audio, video, or multimedia system.

In general, in another aspect, the invention features a method that includes (a) enabling a user to choose between at least two modes for selecting items to be played by an audio, video, or multimedia system, (b) in one of the modes playing an item directly selected by the user, followed by items located sequentially after the first item, as defined by the recording medium, and (c) in another mode playing items selected probabilistically by the audio, video, or multimedia system based on previously indicated reactions of the user.

Implementations of the invention may include one or more of the following features. A user is enabled to choose another mode in which the items are played in the order determined by a play list set by the user. A user may choose another mode in which the items are played from predetermined groups of items. The groups include tracks associated with compact discs. The system reverts automatically to one of the modes after operating in an another of the modes.

In general, in another aspect, the invention features apparatus that includes (a) a user interface to receive selections from a user of a mode for playing items of audio, video, or multimedia content, and (b) an audio, video, or multimedia system connected to the user interface and configured to play, in one mode, an item directly selected by the user through the user interface, and those items that follow the selected items in the sequence defined by an original recording medium, and to play, in another mode, items selected probabilistically by the audio, video, or multimedia system based on previously indicated reactions of the user.

Implementations of the invention may include one or more of the following features. The system may also be configured to play only items selected in advance by the user.

In general, in another aspect, the invention features a medium bearing instructions capable of causing a machine to enable a user (a) to choose between two modes for selecting items to be played by an audio, video, or multimedia system, (b) in one of the modes, play an item directly selected by the user, followed by items located after the selected item, as defined by an original recording medium, and (c) in the other of the modes, play items selected probabilistically by the audio, video, or multimedia system based on stored reaction information of the user derived in connection with previous playing of items of audio, video, or multimedia content.

Implementations of the invention may include one or more of the following features. The instructions are also capable of causing a machine to play only items selected in advance by the user.

In general, in another aspect, the invention features a method that includes (a) when operation of an audio, video, or multimedia system is initiated, automatically entering a mode in which items of audio, video, or multimedia content are played in an order determined by the audio, video, or multimedia system, the order being determined based on stored reaction information derived in connection with previous playing of items of audio, video, or multimedia content.

Implementations of the invention may include one or more of the following features. A user may terminate the automatically entered mode after the operation of the audio, video, or multimedia system is initiated. The user may indicate a reaction with respect to each of the items played by the audio, video, or multimedia system, and the reaction is used to update the stored reaction information. While the audio, video, or multimedia system is operating in the automatically entered mode, a user may directly specify an item to be played, the directly specified item is played, and after the directly specified item has been played, reversion occurs to the automatically entered mode.

In general, in another aspect, the invention features a method that includes playing items of audio, video, or multimedia content on an audio, video, or multimedia system in a sequence of played items determined by one mode of operation, and when the one mode of operation terminates, causing the audio, video, or multimedia system to automatically enter a mode in which items of content are played automatically in an order determined by the system, the order being determined based on stored reaction information derived in connection with user responses to previous playing of items of content.

Implementations of the invention may include one or more of the following features. The one mode of operation includes a user directly specifying an item of audio, video, or multimedia content to be played by an audio, video, or multimedia system, that item to be followed by content following the user-specified item, in an order determined by the recording medium. The one mode of operation includes a user specifying each item of audio, video, or multimedia content to be played.

In general, in another aspect, the invention features a method that includes identifying a user of an audio, video, or multimedia system in connection with a session of use of the audio, video, or multimedia system by the user, and playing items of audio, video, or multimedia content on the system in a sequence determined probabilistically based on responses of the identified user to items played at a time prior to the session..

Implementations of the invention may include one or more of the following features. The user is identified automatically. The user is identified biometrically. The user is identified based on voice recognition, a fingerprint, or eye characteristics. The user is identified in response to an action taken by the user.

In general, in another aspect, the invention features a method that includes enabling a user to indicate a reaction with respect to an item of audio, video, or multimedia content being played, and if the reaction is negative, terminating the playing of the item of audio, video, or multimedia content, and storing the negative reaction for later use.

Implementations of the invention may include one or more of the following features. The user indicates his reaction by manually invoking a control that represents a negative reaction. After the playing of the item has been terminated, a next item to be played is automatically selected based on reactions previously indicated by the user with respect to played items of audio, video, or multimedia content.

In general, in another aspect, the invention features a method that includes enabling a user to advance an audio, video, or multimedia system from a first item being played to a next item to be played, and advancing the audio, video, or multimedia system to the next item and storing the fact that the user has advanced the audio, video, or multimedia system for later use as an indicator of negative reaction to the first item.

Implementations of the invention may include one or more of the following features. The next item is selected by the audio, video, or multimedia system based on reactions previously indicated by the user with respect to played items of audio, video, or multimedia content. The fact that the user has advanced the system is used to update reaction information associated with items of audio, video, or multimedia content belonging to a body of such items.

In general, in another aspect, the invention features a method that includes enabling a user to express any of more than one degrees of negative reaction to an item being played by an audio, video, or multimedia system, advancing the audio, video, or multimedia system to the next item, and storing the degree of negative reaction that the user has expressed, for later use.

Implementations of the invention may include one or more of the following features. The next item is selected by the audio, video, or multimedia system based on reactions previously indicated by the user with respect to played items of audio, video, or multimedia content. One of the degrees of negative reaction is expressed explicitly. One of the degrees of negative reaction is expressed implicitly. One of the degrees of negative reaction is expressed by invoking a manual input device that is associated with negative reaction. One of the degrees of negative reaction is expressed by invoking a manual input device that is associated with controlling the operation of the system for purposes other than indications of reaction.

In general, in another aspect, the invention features a method that includes automatically selecting an item of audio, video, or multimedia content for playing on an audio, video, or multimedia system, the selection being based on reactions previously indicated by a user of the audio, video, or multimedia system with respect to previously played items of content, and in connection with the playing of the item of audio, video, or multimedia content, indicating to the user information that represents the basis on which the item was selected for playing.

Implementations of the invention may include one or more of the following features. The information indicated to the user includes an indicator of the extent to which the item matches the user's previously indicated reactions. The indicator includes a set of icons. The icons include a plus sign and a minus sign.

In general, in another aspect, the invention features a method that includes (a) automatically selecting items of audio, video, or multimedia content to be played by an audio, video, or multimedia system in accordance with stored reaction information accumulated with respect to items being played, (b) interrupting the playing of items by the audio, video, or multimedia system, (c) after a period, restarting the playing of items by the audio, video, or multimedia system, (d) if the period is briefer than a predetermined time-out period, automatically selecting items of audio, video, or multimedia content to be played in accordance with the stored reaction information accumulated up to the time of the interrupting.

In general, in another aspect, the invention features a method that includes playing items of audio, video, or multimedia content from a mass storage medium of limited capacity, storing items of audio, video, or multimedia content on the mass storage medium, storing reaction information derived from a user based on the playing of items of content from the mass storage medium, and when the mass storage medium becomes full, identifying an item of audio, video, or multimedia content to be deleted from the mass storage medium based on the stored reaction information.

Implementations of the invention may include one or more of the following features. The reaction information is stored on the mass storage medium. The mass storage medium is transportable between machines. Items of audio, video, or multimedia content stored on the mass storage medium are scored according to the reaction information and the item is identified to be deleted based on its score relative to the scores of other items.

In general, in another aspect, the invention features apparatus that includes a transportable mass storage medium bearing stored items of audio, video, or multimedia content and reaction information derived from a user based on the playing of items of audio, video, or multimedia content from the mass storage medium.

Implementations of the invention may include one or more of the following features. The reaction information includes scoring of items on the medium. The reaction information is associated with user presets. The medium also bears metadata identifying characteristics of the items. The medium includes a portable hard disk.

In general, in another aspect, the invention features a medium bearing instructions capable of causing a machine to play items of audio, video, or multimedia content from a mass storage medium of limited capacity, store items of audio, video, or multimedia content on the mass storage medium, store reaction information derived from a user based on the playing of items of audio, video, or multimedia content from the mass storage medium, and when the mass storage medium becomes full, identify an item of audio, video, or multimedia content to be deleted from the mass storage medium based on the stored reaction information.

Implementations of the invention may include one or more of the following features. The reaction information is stored on the mass storage medium. The mass storage medium is transportable between machines. Items of audio, video, or multimedia content stored on the mass storage medium are scored according to the reaction information and the item is identified to be deleted based on its score relative to the scores of other items.

In general, in another aspect, the invention features apparatus that includes an audio, video, or multimedia system including a medium storing items of audio, video, or multimedia content, a player to play a sequence of the items in accordance with reaction information provided by a user in connection with previously played items, and a user interface to interact with a user concerning the playing of items of audio, video, or multimedia content, the audio, video, or multimedia system being configured to provide suggestions to a user through the user interface of compilations of audio, video, or multimedia items for purchase.

Implementations of the invention may include one or more of the following features. The compilations include compact discs, DVDs, cassette tapes, or records. The user interface includes at least one of voice recognition and voice synthesis.

In general, in another aspect, the invention features a method that includes enabling a user to indicate a reaction with respect to an item of audio, video, or multimedia content being played by an audio, video, or multimedia system, using the reaction to influence a future sequence of items of audio, video, or multimedia content to be played, and enabling the user to undo the indication of the reaction. The undo may be enabled by a manual user interface device.

In general, in another aspect, the invention features a method that includes identifying to a user of an audio, video, or multimedia system an item of audio, video, or multimedia content that is going to be played, enabling the user to cause the audio, video, or multimedia system not to play the item, storing information about the user's causing the item not to be played, and using the stored information in connection with selecting items to be played. The item may be identified to the user on a display or by voice synthesis.

In general, in another aspect, the invention features a method that includes playing items of audio, video, or multimedia content to a user, automatically selecting a sequence of the items to be played, the sequence reflecting reactions of the user, adapting the sequence of items over a longer period of time based on the user's reactions indicated in connection with the playing of items of audio, video, or multimedia content, and temporarily adapting the sequence of items over a shorter period to reflect a short-term change of mood of the user as reflected in the indicated reactions.

Reaction information is maintained with respect to the items, the reaction information including longer term reaction information and shorter term reaction information.

In general, in another aspect, the invention features a method that includes playing items of audio, video, or multimedia content in a sequence determined by reactions of a user of an audio, video, or multimedia system, the reactions being expressed in connection with the previous playing of items, and automatically adapting the sequence to reactions expressed over time, the adapting being done without requiring the use of metadata that defines the styles and artists of the items available for play.

In general, in another aspect, the invention features a method that includes playing items of audio, video, or multimedia content from a body of items of audio, video, or multimedia content using an audio, video, or multimedia system, automatically selecting a next item to be played based on reaction information previously provided by a user in connection with the playing of items from the body of items, each of the items of audio, video, or multimedia content having a finite, non-zero probability of being selected.

Implementations of the invention may include one or more of the following features. The probability of items being selected is determined by scores associated with the respective items. The probability of selecting an item having a relatively lower score varies with a risk factor. The risk factor is determined by a user reaction expressed for a recently played item. The risk factor is increased if the user reaction is positive. The risk factor is decreased if the user reaction is negative.

In general, in another aspect, the invention features a method that includes playing an item of audio, video, or multimedia content for a user from a body of items of audio, video, or multimedia content available on an audio, video, or multimedia system, receiving reaction information from a user in connection with the playing of the item, and automatically updating, for each of the items in the body, the probability that the item will be selected for playing.

Implementations of the invention may include one or more of the following features. Items are selected for playing based on the updated probabilities. The reaction information includes explicit information about whether the user liked or disliked the item. The reaction information includes implicit information about whether the user liked or disliked the item.

In general, in another aspect, the invention features a method that includes in connection with playing an item of audio, video, or multimedia content on an audio, video, or multimedia system, receiving from a user an indication of a reaction to the item, and enabling the user to indicate the reaction either explicitly, implicitly, or both.

Implementations of the invention may include one or more of the following features. The user is enabled to indicate the reaction to the item by activating a user interface control that is designated to receive explicit reaction. The user is enabled to indicate the reaction to the item by activating a user interface control that is designated for a function other than the receipt of a user's explicit reaction. The user interface control is designated for transport control. The reaction includes affinity for the item.

In general, in another aspect, the invention features a method that includes playing a sequence of items of audio, video, or multimedia content, the sequence being selected based on a probability distribution across a set of available items and on a risk factor representing a degree of risk to be taken in playing items that are assigned relatively lower probabilities in the distribution, and altering the risk factor based on reactions indicated by a user.

Implementations of the invention may include one or more of the following features. The risk factor is increased if the reaction is positive. The risk factor is decreased if the reaction is negative.

In general, in another aspect, the invention features a method that includes storing a probability distribution of probabilities assigned to items of audio, video, or multimedia content belonging to an available body of audio, video, or multimedia content items, selecting items to be played on an audio, video, or multimedia system for a user, the selecting being based on the probability distribution, and altering the probability distribution dynamically based on reactions indicated by a user in connection with the playing of the items.

In general, in another aspect, the invention features a method that includes enabling a user to control a sequence of items to be played by indicating his reactions in connection with the playing of items, the control being effected without requiring a display of any information to the user.

In general, in another aspect, the invention features a method that includes controlling the playing of items of audio, video, or multimedia content by an audio, video, or multimedia system to a user based on reactions previously indicated by a user in connection with the playing of items of audio, video, or multimedia content, the control being adapted dynamically beginning when the audio, video, or multimedia system is activated and without requiring pre-seeding of reaction information. The user may pre-seed reaction information before or during activation of the audio, video, or multimedia system.

In general, in another aspect, the invention features a method that includes maintaining a history of items played automatically on an audio, video, or multimedia system, maintaining scores for items belonging to a body of available items of audio, video, or multimedia content, and updating the scores to reflect the history of items played, and selecting items to be played probabilistically based on the scores. The updating includes penalizing the scores of recently played items. The updating includes reducing over time the extent to which the scores are penalized. The scores incorporate other factors in addition to the history of items played.

In general, in another aspect, the invention features apparatus that includes a manually-operable control mounted in a position in a vehicle that permits a user to operate the control while holding a steering wheel of a vehicle, and circuitry coupled to the control and configured to interpret operation of the control as indicating a reaction of the user with respect to an item of audio, video, or multimedia material being performed for the user in the vehicle, and to use the reaction in determining items of audio, video, or multimedia material to be played in the future.

Implementations of the invention may include one or more of the following features. The manually operable control is mounted on the steering wheel. The manually operable control includes at least one button.

In general, in another aspect, the invention features a method that includes (a) storing metadata associated with items to be selected from a body of items, the metadata implying relationships among the items, (b) in response to a request for items, providing an item from the body of items, the provided item being one that conforms to the request, (c) receiving reaction information from a user indicating a reaction with respect to the provided item, (d) selecting another item probabilistically from the selected body of items based on the reaction information, and (e) repeating the receiving and selecting to provide items of interest to the user.

Implementations of the invention may include one or more of the following features. The body of items includes a database. The body of items includes web pages. Each of the items in the body has a non-zero probability of being selected. The reaction information is treated as short-term information and as long-term information in scoring items in the body for possible selection.

In general, in another aspect, the invention features a method that includes adding new items of audio, video, or multimedia content to a body of content items, interactively receiving from a user an indication of a categorization of each of the new items, receiving reaction information from a user during the performance of items of the content, and selecting items for play based on the user reaction information and on the categorization information from the user.

In general, in another aspect, the invention features a method that includes selecting items of audio, video, or multimedia content from a body of content items for presentation to a user, the selecting being based on a combination of reactions indicated by the user with respect to previously played items and on metadata that implies relationships among items of the content, each of the items having a finite probability of being selected each time an item is selected.

In general, in another aspect, the invention features a method that includes during a playing of one item of audio, video or multimedia content that belongs to a pre-assembled collection of items of audio, video, or multimedia content such as an album, where the album is one of multiple albums of audio, video or multimedia content stored on a mass storage medium, enabling a user to invoke a control to cause all of the other items that belong to the collection to be played automatically following the one item.

Implementations of the invention may include one or more of the following features. After completion of the automatic playing of the other items, the system reverts to a mode in which other items are automatically selected for playing from a body of items that includes items of other albums. The one item is selected probabilistically by the audio, video, or multimedia system based on reactions of the user derived in connection with previous playing of audio, video, or multimedia content. The other items from the body of items are automatically selected probabilistically by the audio, video, or multimedia system based on reactions of the user derived in connection with previous playing of audio, video, or multimedia content.

In general, in another aspect, the invention features a method that includes during the play of an item of audio, video, or multimedia content, receiving information from a user with respect to his reaction to the item being played, and subsequently playing another item of audio, video, or multimedia content that is selected probabilistically from a body of items based in part on the reaction information from the user.

In general, in another aspect, the invention features a method that includes delivering items of possible relevance from a database of patent materials to a user, receiving information representing the user's perception of the relevance of the items, updating scores for the respective items based on the received information and on relationships among the items, and probabilistically selecting items for delivery to the user based on the scores.

Implementations of the invention may include one or more of the following features. The items of possible relevance include patents and patent applications. The relationships among the items are based on metadata about the items. The metadata includes at least one of inventors, assignees, classifications, dates, and patent numbers. The user can receive the items and provide the information through an on-line connection. Each of the items has a non-zero probability of selection. One or more than one of the items may be delivered to the user at one time.

Other advantages and feature will become apparent from the following description and from the claims.

### DESCRIPTION

Figures 1, 2, and 3 are block diagrams of platforms.
Figures 4, 5, and 6 are state diagrams.
Figure 7 is a block diagram.
Figure 8 shows a node.
Figures 9 shows a display.
Figures 10, 11, and 12 show database schemas.
Figure 13 shows a user interface.
Figure 14 shows a history of tracks.
Figure 15 shows a database structure.
Figure 16 shows a state diagram.
Figure 17 shows a flow chart.
Figure 18 shows a remote controller.
Figure 19 shows a display.
Figures 20 and 21 are state diagrams.
Figure 22 shows a hierarchy.
Figures 23 and 24 show user interfaces.
Figure 25 shows a user interface.
Figures 26, 27, and 28 show displays.
Figure 29 shows a graph.
Figure 30 shows a hierarchy.
Figure 31 shows a graph.
Figure 32 shows a user interface.
Figure 33 shows a block diagram.
Figure 34 shows a hierarchy.

### Overview

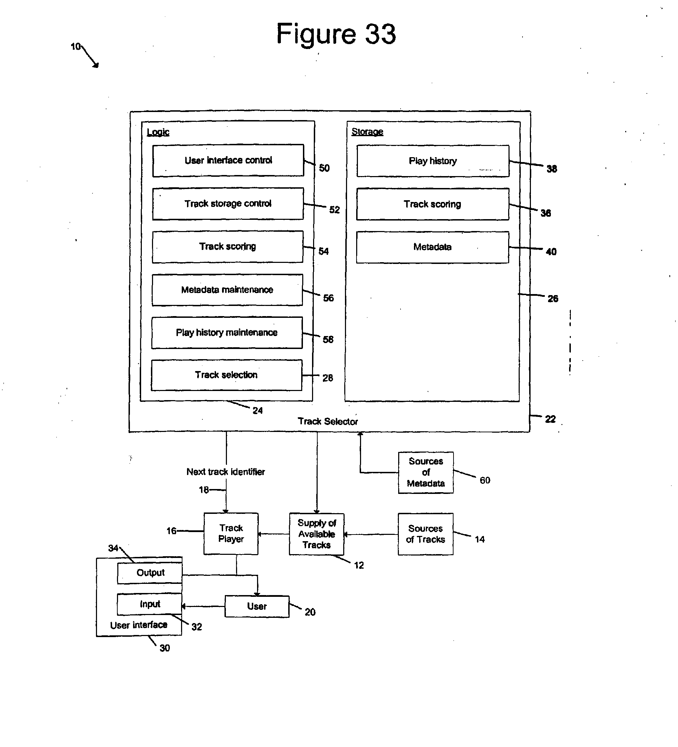

As shown in figure 33, in one example of a system 10 for selecting items based on user preferences, the items are pieces of music (tracks) that are part of a supply of available tracks 12.

The tracks are supplied from sources of tracks 14 that could include media such as audio tapes, compact discs, minidisks, digital versatile disks, or other sources including broadcast media, wireless connection, satellite radio, streaming media over the Internet or some other computer network, or any other source. Thus, while we use the word tracks as if the items only appeared as tracks on tangible media, we mean the word tracks to include any items in whatever form they are created or stored or delivered to a user.

Also, although we will use the example of music in much of our discussion, the items as to which preferences are being expressed can be any kinds of items, including audio, video, and multimedia items and non-audiovisual items including records of a database, items available by searching on the world wide web, or features of a software program, among others. Similarly, any kind of source of tracks 14 would be possible including sources available commercially and sources produced by the user, for example. We use the terms CD and compact disc to include all types of sources of tracks. In some cases, for instance where tracks represent features in a software program, the source of tracks will be the system itself (since the software is the "source" of its own features). Alternatively, in this example, a CD could represent a logical subset of the features in the software, for instance, all text formatting commands could constitute a single CD, where each command would be a single track.

The supply of available tracks may be stored in a mass storage device so that they are available locally as needed. The storage device could include a hard disk (including a portable hard drive), a CD-RW drive, a tape recorder, a video recorder, a memory device, or any other storage device that can hold multiple items for performance to a user. For simplicity, we refer alternatively to a hard disk or a storage device throughout; any storage device that provides read access (with or without write access). In some cases, it may not be necessary to store the available tracks locally. Instead, it may be possible to make them available on-the-fly from a remote source through a wired or wireless communication channel. When storage is used, the system can provide a mechanism for capturing the tracks, converting them to an appropriate format, generating associated identifying information, and recording them on the storage medium.

In the system shown in figure 33, tracks are played for a user by a track player 16. The track to be played at a given time is identified by a next track identifier 18. The track player could include any device capable of performing tracks for a user in response to signals identifying a track to be played. Thus, the player could include a CD player, a CD changer, a tape player, a wireless music playing device, an MP3 player, a video tape player, a DVD player, a web browser, a display device, a portable digital assistant, a mobile or stationary telephone, or a computer, for example. The nature of the track player depends upon the nature of the track. For instance, where a track represents a feature in a software program, the track player would be the software program itself. In some examples, the track selector may control multiple track players.

When the player receives the next track identifier from the track selector, the track player fetches the identified track from the supply and performs it for the user 20. In the case of audio, video, or other multimedia tracks, the playing of tracks would typically be done sequentially. When the tracks comprise records in a database or resources available through the internet, for example, the tracks may be displayed in groups at the same time based on a set of next track selectors. Thus, we use the words play or perform broadly to mean any display, performance, or other delivery of items to a user in a form appropriate to the track and the user.

The determination of which track or tracks are to be played next is made by a track selector 22. The track selector could take a variety of forms. In some cases it can be a general purpose computer including a microprocessor, memory, appropriate buses and caches, mass storage, operating system software, application software, and I/O drivers for associated input and output devices. In other cases, it could be a custom built set of circuits designed for the specific purposes discussed here. The track selector could be part of an existing system within a vehicle or a building or within a computer or a hand-held device. The entire set of elements shown in figure 33 could be implemented within a hand-held device such as a personal digital assistant, a mobile phone, or a music player or within a system that is situated in a vehicle or a building.

The track selector could include logic 24 in the form of software, firmware, or hardware, and storage 26 in the form of memory or a mass storage device. The track selection is performed by a track selection module 28. Although details of the track selection process are described later, in general, the track selection is based on information provided by the user through a user interface 30 and on information about the tracks that is held in storage 26. In some cases, the information provided by the user is implicit or explicit feedback indicative of reactions or preferences of the user with respect to tracks and the choice of tracks to be played depends on the feedback. The reaction information, which may be the raw information entered by the user, or information (for example, variables) derived from the raw information, is stored and used for purposes that include making the selections of future tracks to be played. In other cases, the track selection is not based on past user preference or reaction information, but only on a more conventional set of commands provided by the user through the input side 32 of the user interface. The conventional commands may be provided through aspects of the user interface that enable a user to specify, for example, that he wants the system to play all of the tracks of a selected CD in track order.

The user interface includes both the input side 32 and an output side 34. The input side may include buttons, knobs, touch panels, speech recognition software, and sensors that may be able to determine implicitly what the user wishes to have the system do or what preference information the user intends to provide. The output side could include audible signals, a display, lights, speech synthesis, or any other device to provide information to the user about the state of operation of the system.

The input side may include explicit and implicit mechanisms for the user to indicate preferences about tracks and otherwise to provide feedback or reactions. The explicit mechanisms can include buttons or other devices that enable the user to indicate directly that he likes or does not like a track, for example, a track being played. Implicit mechanisms may also be used; for example, when a user presses a transport button to skip to the next track, his action can be interpreted as an implicit indication that he did not like the track being played.

The storage in the track selector holds information that enables the system to select tracks for play. Track scoring information 36 may be provided for all of the tracks in the supply of tracks. The track scoring information for all tracks in the supply of tracks may be updated each time any track is played or a user takes any action through the user interface that reflects user feedback and preferences. Tracks are selected based on their relative scores in a manner described later.

Also held in the storage 26 is a play history 38 that records the sequence of identifiers of tracks that were played previously and metadata 40 that holds information about the tacks (for example, the title, the performer, the genre). Alternatively, the metadata may be located in a read-only repository separate from the storage, for instance, on a CD-ROM, or it may be accessed via a wireless mechanism from an external central data source. Other information is also held in the storage and is described in more detail later.

In addition to the track selection module 28, the logic 24 includes a module 50 that controls the interaction with the user interface and a module 52 that controls the storage of tracks into the supply of available tracks. A metadata maintenance module 56 acquires and maintains the metadata, which is provided from sources of metadata 60 and in some cases may be provided directly by the user through the input of the user interface or through a personal computer interface to the storage. A play history maintenance module 58 maintains the play history 38. A track scoring module 54 may maintain data about user responses to previously played tracks and may assign scores to tracks for use by the track selection module 28. Other logic modules may be included as will become clear from the discussion below.

The item selection system 10 provides a user with simple intuitive access to items, such as music tracks, that satisfy the user's preferences, without requiring advance configuration. The system selects items, i.e., tracks, from the supply automatically, taking account of past and current user behavior and internal knowledge of the content of the items. The system is arranged so that the providing of feedback from the user is simple. With minimal involvement from the user, the system selects items that he is interested in.

In one simple example of the operation of the system, when a user is listening to a track, he may push a preference button that indicates he likes the track or another preference button that indicates he dislikes the track. In either case, the information about his preference is accumulated and stored as part of a score for that track. At the same time, the preference information is used to change other tracks' score, for example, other tracks on the same CD or other tracks in other CDs by the same artist. When the user indicates that he dislikes the track the system may jump to another track. The user can again indicate his preference by pushing one of the preference buttons and the information is again used to rescore the tracks. If the user allows a track to play through completely, or he presses the transport button to force the system to jump to the next track, that implicit preference information is also used.

When the system is operating in a mode in which it is automatically choosing tracks, each track in the supply of available tracks has a non-zero probability of being played next in accordance with an algorithm that considers the scores of the tracks. Thus, the system adapts quickly and effectively to the users preferences and does so while requiring only a limited amount of interaction by the user to indicate his preferences. More details about the manner in which the user expresses preferences, the manner in which the system selects a track for play, and the manner in which the track scores are maintained is set forth later.

### Benefits

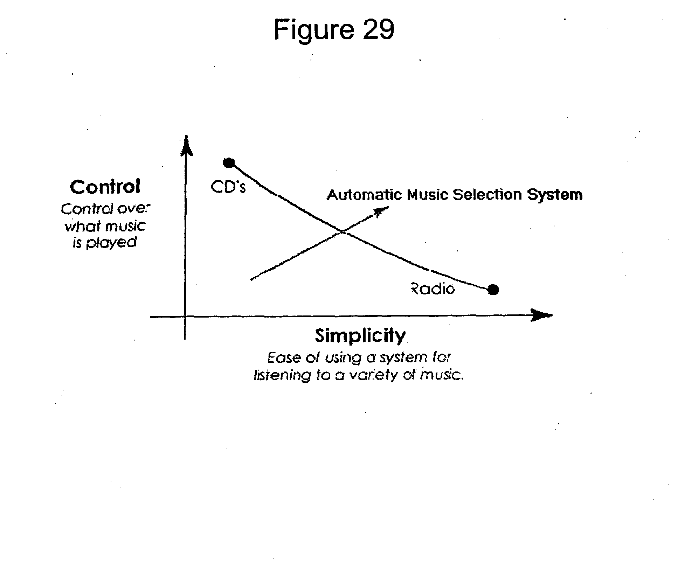

Among other advantages of the selection system are one or more of the following:
(1) Simplicity. The system provides simple access to the collection of tracks. The system permits a user to merely press the "power" button and start to hear tracks that he or she enjoys.
(2) Control. The system provides this simple access without the user losing control over what is played. By expressing simple responses to the track that is currently playing, he or she may affect what the system chooses to play next. In the music field, CD players permit a high degree of control but may require substantial user involvement in the music selection process, reducing overall simplicity. Radio requires minimal user involvement, permitting a high degree of simplicity, but permits little control. See figure 29. When applied to musical tracks, this system is intended to bridge that gap.
(3) Access. The system provides access to an entire stored collection of tracks without the original medium necessarily available.
(4) No setup. The system provides this control without requiring a user to decide what to play ahead of time.
(5) Safety. The system allows the user to enjoy his entire collection while still safely operating a motor vehicle, or engaging in other tasks that require close attention.

### Platforms

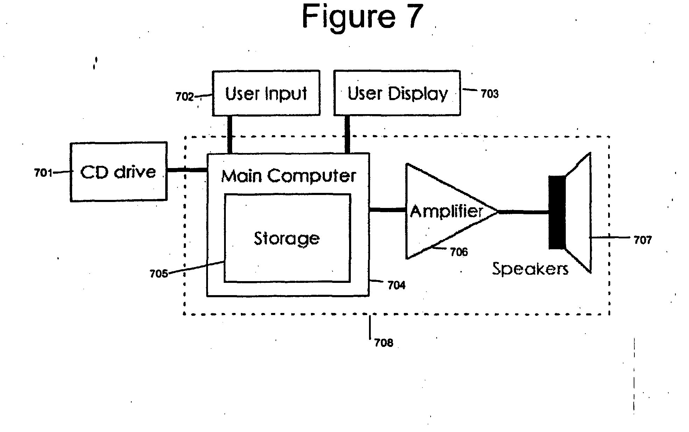

In the context of music items, the selection system may be embodied in a hardware system of the form depicted in figure 7. The system 708 includes a computer 704, a storage device 705, an amplifier 706, and speakers 707. External components may include a CD drive 701, a user input 702, and a display for the user 703.

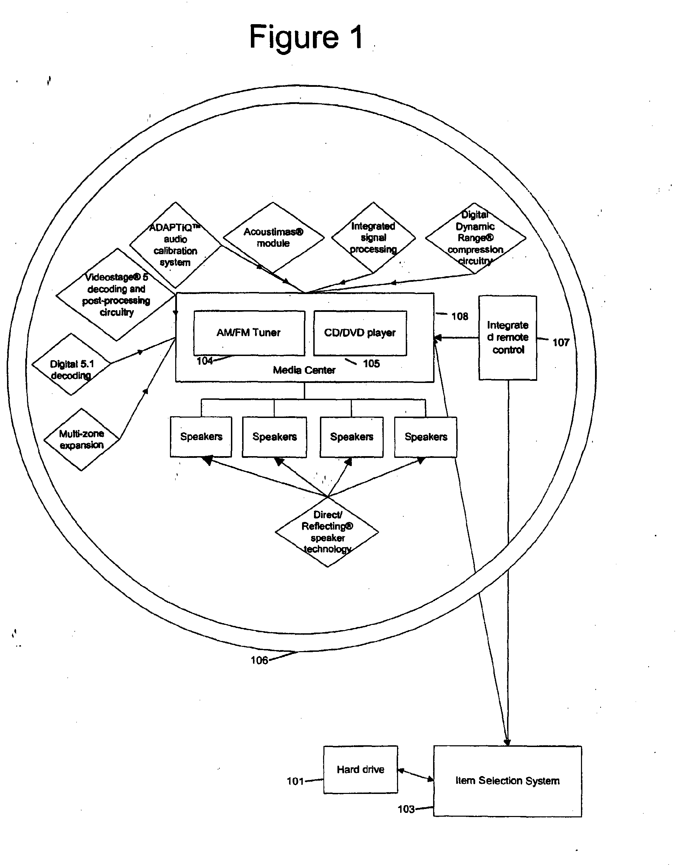

Three possible platforms for incorporation of the selection system are shown in figures 1, 2, and 3, although a wide variety of platforms could be used.

As shown in figure 1, the system 103 may be built into a home entertainment system such as the Bose Lifestyle 35 (106) by adding a hard drive 101 to store music for later playback. The system would then determine the sequence of tracks to be played and would provide them to the entertainment system from the hard drive. User preference information and feedback could be received from the user at the integrated remote control 107 and sent back to the system 103 for use in determining future tracks to be played. The entertainment system 106 would have the capacity to play music from AM and FM radio 104, compact discs or DVDs 105, or its hard drive 101, and would be multi-zone capable, permitting it to play different items of music in different areas of a house. The remote control 107 would interface both with the core unit 108 and with the item selection system 103.

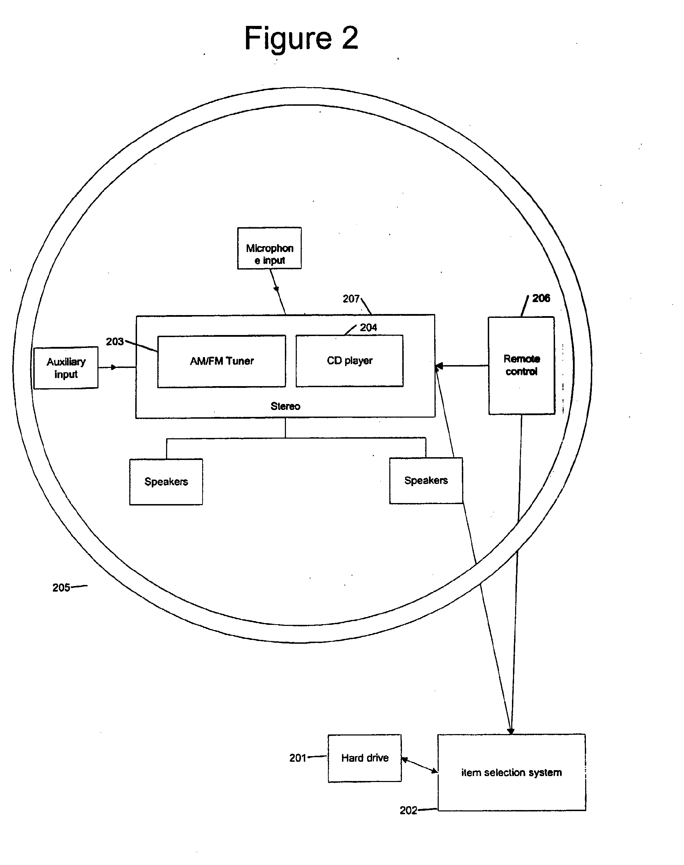

In another example, depicted in figure 2, the item selection system 202 could be hosted on a smaller unit, such as the Bose Acoustic Wave Music System 205, again by the addition of a hard drive or other random access storage medium 201. In such a configuration, the system could play music from AM and FM radio 203, compact discs 204, and its internal hard drive 201. The remote control 206 would interface both with the core unit 207 and the item selection system 202.

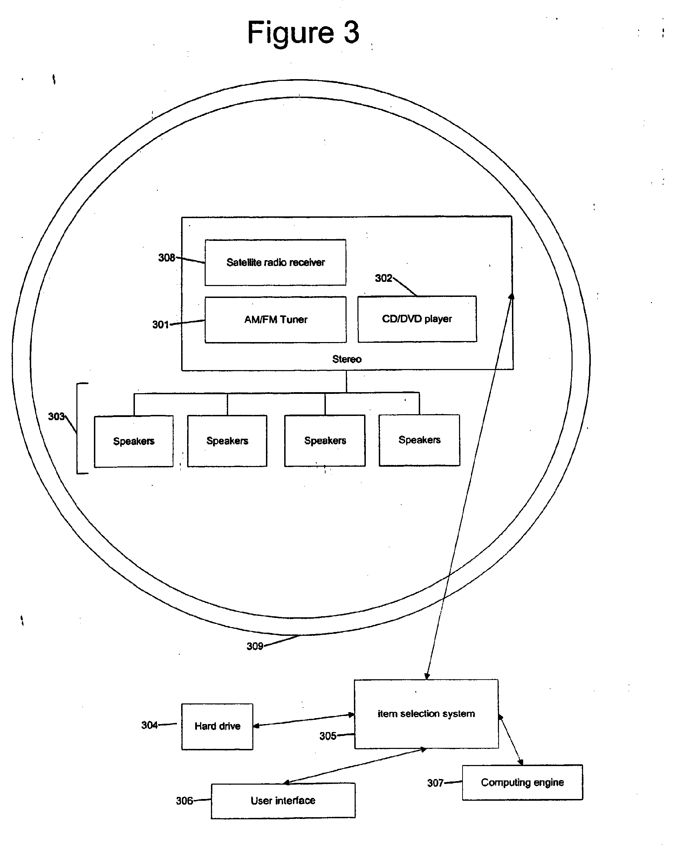

In a third example, shown in figure 3, the item selection system 305 could be integrated into a vehicle's music network. In this implementation, the system would supplement a standard car entertainment system 309 (which would include, at minimum, an audio source such as a compact disc player 302 and speakers 303) a hard drive or other random access storage medium 304, a computing engine 307, and additional user interface controls 306, and would link into the car's audio-visual network. In this configuration, the system would play music from its internal hard drive 304, which would in turn be able to record music from AM and FM radio 301, CDs or DVDs 302, and potentially a satellite radio 308.

As noted earlier, the system could also be embodied in other platforms, such as a video jukebox system, a database engine, or a software program (where the items to be selected might be features or menu items).

### Modes of operation

As mentioned earlier, the system can play tracks from a variety of sources, for example:
(1) CD/DVD. The system plays a currently-loaded CD/DVD disc. In this mode, with respect to the currently-loaded CD/DVD disc, a user can select standard options available on compact disc players, for example, play, pause, next track, and previous track. Operation in CD/DVD mode continues until a new mode is selected.
(2) AM/FM/satellite radio. The system operates as a standard AM/FM radio, or as a satellite radio.
(3) cassette tape. The system operates as a cassette player.
(4) stored tracks. The system plays tracks from its internal hard drive.
(5) the Internet. The system plays tracks retrieved from another computer located on the Internet.
(6) internally. For instance, when tracks are features of computer software, there may be no external data necessary.

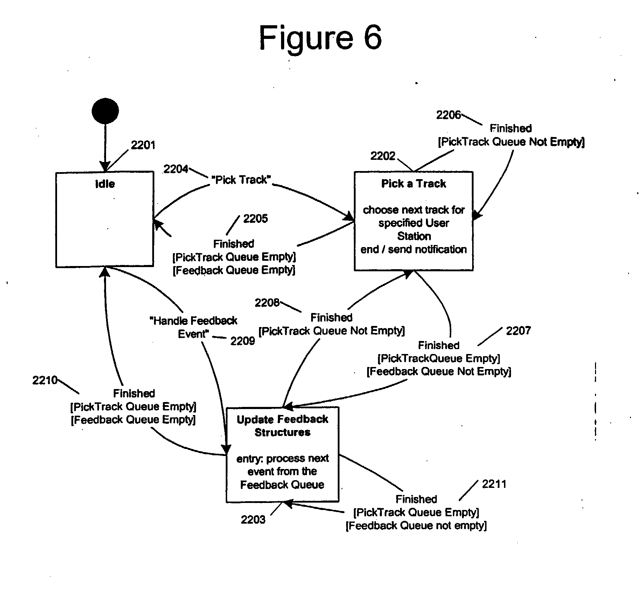

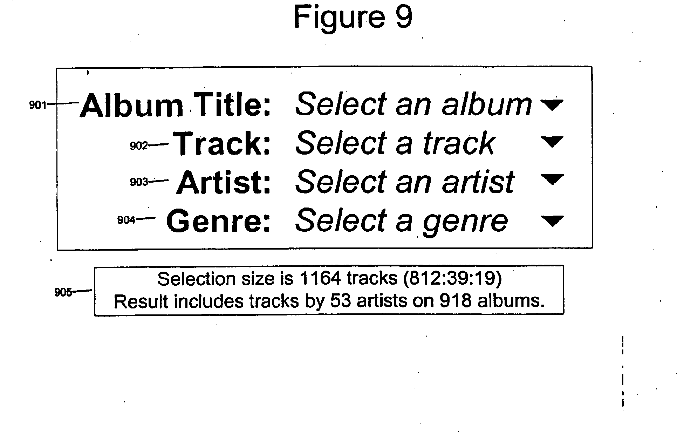

When the system plays tracks from its hard disk, or where no external data is needed, it may operate in one of the following modes:
(1) an automatic selection mode. As shown in figure 6, in this mode, the system plays a selection taken from all tracks available to the system. The user provides feedback, explicitly and implicitly, regarding the tracks that are played. The feedback may represent user preferences. The system selects the track for the user based on user feedback (emphasizing more recent feedback) and a history of recently played tracks. The selection system may also take into account feedback stored in a current so-called user station (see "Stations and Presets," below). In some implementations, for greater simplicity, the automatic selection mode is the default mode, and, when any other mode has completed playback, the system reverts to the automatic selection mode.
   Figure 6 describes the process by which the selection system functions when in automatic selection mode. Track selection is accomplished by the automatic selection module (see "Modules," below). The automatic selection module is initially in an idle state 2201. (Note that other modules may not be idle; in particular, the system may be playing a track.) When the module receives a notification 2204 that it is time to pick the next track (a signal could be provided by the player indicating that the prior track has been or is soon to be completed), as described in the "Modules" section, it switches to the "Pick a track" state 2202. It then picks the next track to play, as described in later sections. If further pick-track requests are received while the module is in the pick-track state, it adds them to a pick-track queue. If, when the module has completed picking a track, there are no items in the pick-track or feedback queues, the system returns 2205 to the idle state. If there are further pick-track requests, the system returns 2206 to the pick-track state.
   When the module receives a feedback event (i.e., a message from the user interface module that there has been an implicit or explicit indication from the user with respect to the track currently being played), if the module is in the idle state, the system switches 2209 to the "Update Feedback Structures" state 2203. If the module receives the message while it is in the pick-track or update feedback structures state, it places the event on the feedback queue. When the module completes the pick-track process, if the feedback queue is not empty and there are no more pick-track events, the module switches 2207 to the "Update Feedback Structures" state. There, it updates the stored tracks graph, as described below. When it is finished, it returns 2210 to the idle state, if the feedback and pick-track queues are empty. If the feedback queue is not empty, the module returns 2211 to the update feedback structures state. If the pick-track queue is not empty, the module returns 2208 to the pick-track state.
   Other embodiments permit the user to specify that automatic selection mode should operate on the CD or album level, rather than on the track level. In this configuration, automatic selection mode would select a CD that it anticipates the user is interested in, then play the CD from start to finish.
(2) a tracks mode. In this mode, the system plays only pre-specified tracks, for instance, only those tracks listed in a given preset defined by the user, or all tracks on a particular CD or album. This mode may have several playback options including (a) normal, (b) shuffle and (c) repeat.
   (a) a "normal" option causes the system to play through all the tracks in the order in which the user programmed them. At the conclusion of the last track, the system may return to automatic selection mode.
   (b) a "shuffle" option causes the system to play the tracks specified by the user in a random order. When all the tracks have been played, the system may return to automatic selection mode.
   (c) a "repeat" option will cause the system to stay in tracks mode until the user directs the system to change. This mode can be used in conjunction with the "normal" or "shuffle" options to determine in what order the tracks are played before they are repeated.
(3) a bins mode. In this mode, each preset (represented by a user interface object such as a keypad button on a control panel) contains one or more CDs. The system will play tracks from any CD the user has added to the current preset. If a CD has only been partially stored, the system plays only those tracks that have been stored. In systems that implement bins mode, CDs may be added to and deleted from bin presets through the settings menu. In some examples, when the system is playing stored tracks in any mode, a user may press and hold a preset key in order to add the CD from which the current track was recorded to that preset. The order in which the tracks are played is specified by the same playback options described under "Tracks." At the conclusion of play under the "normal" or "shuffle" option, the system may return to automatic selection mode.
(4) a Virtual CD Changer mode. This mode is similar to bins mode except that each preset represents only a single CD. Thus, the user may press a button on the keypad 1805 to select a CD to play. Alternatively, the user may enter a two- or three-digit code to select a specific CD. The user may also select one of the playback options described in "Tracks." These options apply to only the current CD, although an additional option might permit them to apply to all tracks on all CDs in any of the presets. At the conclusion of playback, the system may return to automatic selection mode.
(5) a search mode (see figure 9). In search mode, the user can scroll through displayed lists of the available content sorted by disc number, artist, or other information that may be available. The user may select for playback an entire disc, an artist, a genre, or any combination. The user may, alternatively, enter a code representing a CD that has been recorded to the system's hard disk to play tracks from that CD.

Playback options described for the tracks mode apply to search mode as well. At the conclusion of play under the "normal" or "shuffle" option, the system returns to automatic selection mode. Playback actually takes place in tracks mode; search mode merely sets up a special playlist for playback by tracks mode.

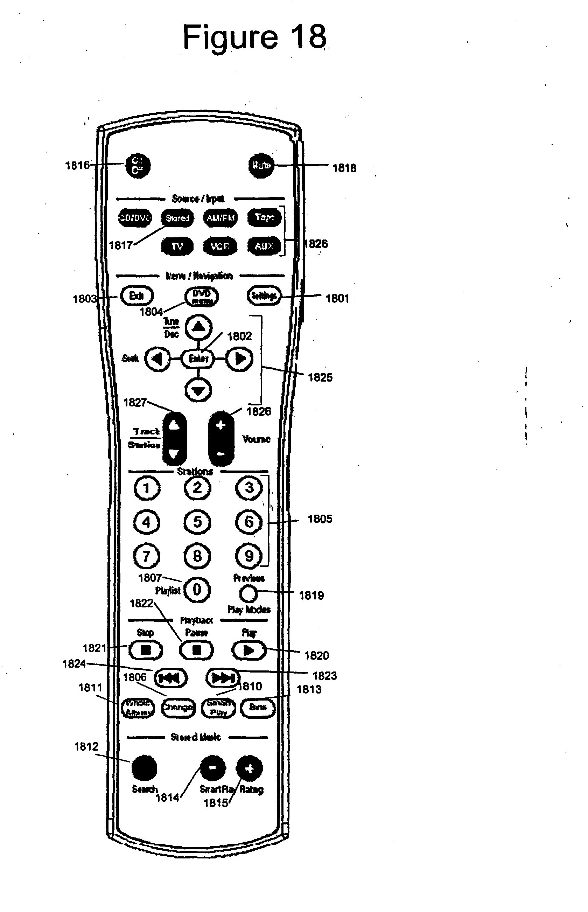

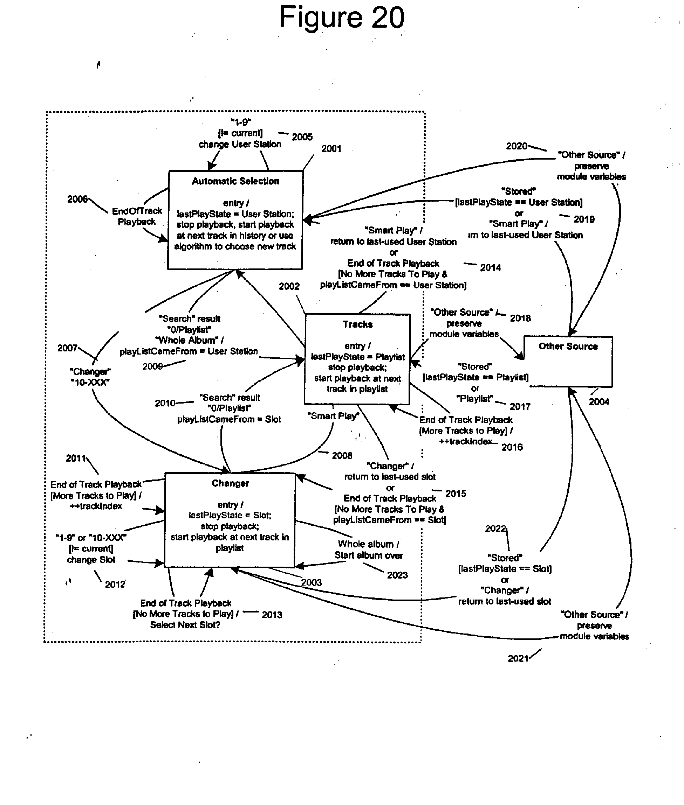

In one example, the system maintains only one playlist; the user activates this playlist by pressing 0 on the keypad. In this example, switching among some of the modes takes place according to the state diagram in figure 20. The system begins, by default, in automatic selection mode 2001. The user can change the user station (see "User stations and presets," below) 2005 by pressing the corresponding button on the keypad 1805 of a remote controller (see figure 18). As a track completes 2006, the system remains in automatic selection mode and chooses a new track. When the user presses changer 1806, the system switches 2007 to changer mode 2003. In changer mode, if the user presses a keypad button or selects a CD by directly entering a code, the system stays 2012 in changer mode 2003, and begins playing tracks from the CD whose code was specified, or from the CD assigned to the keypad button (here called a slot). At the end of a track, the system plays 2011 the next track. When the CD is completed, the system begins to play 2013 the CD specified by the next slot. That is, if a user presses keypad button 2, the system plays the CD in slot 2, and then plays the CD in slot 3. If the user presses "Smart play," the system switches 2008 to automatic selection mode. If the user presses Whole Album from Changer mode, the system remains 2023 in Changer mode but begins the current album from the beginning.

When the user presses search 1812 (and makes a selection from the search screen), playlist 1807, the system switches 2009, 2010 from automatic selection mode 2001 or changer mode 2003 to tracks mode 2002. From automatic selection mode, the Whole Album button also causes the system to switch 2009 to tracks mode. If the search button was pressed, the system sets up a playlist that represents the search results. If playlist was pressed, the system plays the tracks in the playlist. If Whole Album was pressed, the system sets up a playlist that represents each of the tracks on the CD that is currently playing. Tracks mode plays the playlist as described earlier. Playback continues 2016 as long as there are more tracks to play. If the user presses "Smart Play," or if the system completes all tracks in the play list, and the previous state was automatic selection mode, the system switches 2014 to automatic selection mode. If the user presses "Changer," or if the system completes all tracks in the play list, and the previous state was Changer mode, the system switches 2015 to Changer mode.

If the user presses another source button from any of the three states, the system switches 2018, 2020, 2021 to the new source 2004, after saving its state. From the other source, the user may have the currently-playing track recorded to the system's hard disk. When storage is completed, the system returns 2017, 2019, 2022 to the previous state. If the user presses "Smart play" from the other source mode, the system switches 2019 to the most recently used user station. If the user presses "Changer," the system switches 2022 to changer mode. If the user presses playlist, the system returns to tracks mode.

In this example, holding down 0 while a track is playing in changer, tracks, or automatic selection mode adds the current track to the playlist. The user may remove a track from the playlist by pressing a remove button, or selecting an option from the settings menu.

Other implementations permit more than one playlist and some embodiments also implement the "bins" mode, described above, possibly by modifying tracks mode to play full CDs rather than individual tracks from a CD. Some implementations do not include all the modes listed above. Other implementations may include additional or substitute modes. For instance, some implementations might include an "all items by this artist" button, that is similar to the "whole album" button except that it plays all tracks performed by the same artist as the currently-playing track. Other subsets of the search functionality are also pbssible, such as "all items in this genre."

### Dynamic complexity adjustment

The selection system can offer both a complex mode of operation, allowing, for example, for complete control by the user of all functions, as well as a more automatic mode that reduces the number of features available to a user and permits, for example, only simple user control. In situations where the user's attention is primarily focused on another task, some features, for example complex aspects of the user interface, are disabled. During that time, the system offers a simple yet functional interface that can satisfy the user's preferences without distracting him or her from the primary task.

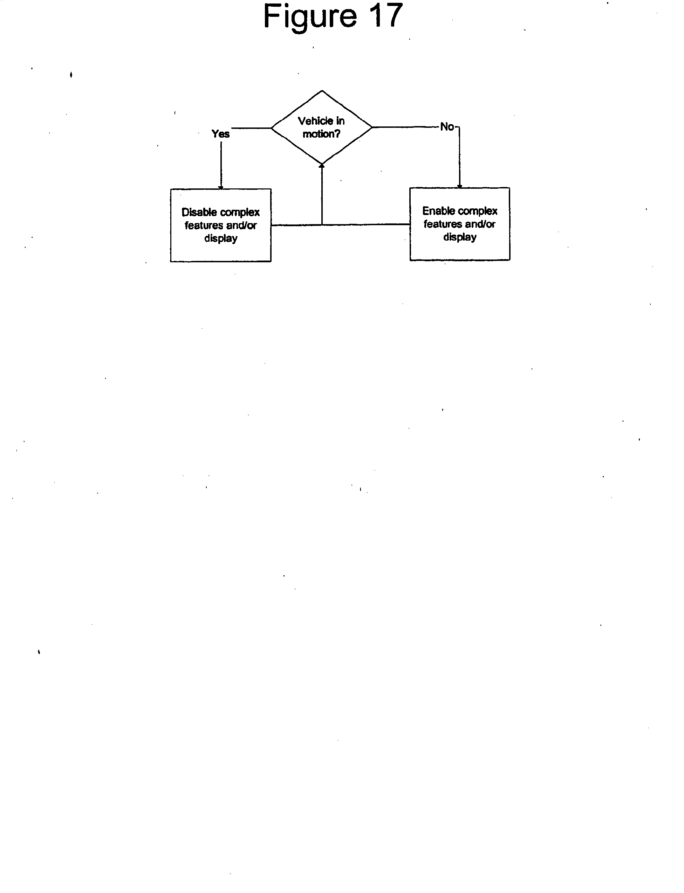

One example of this feature can be used in a selection system that is installed in an automobile (see figure 17). There, it may be configured so that the search mode will not be made available to the user while the car is in motion. This mode may be restricted such that it is only permitted while the vehicle's gears are in park, or the parking brake is set. In any other gear, the other modes are available.

### Personal computer connection.

Some embodiments of the system may permit an optional interface with a personal computer. These embodiments permit the user to detach the storage device from the system and attach it directly to the computer. The user could then save to the computer a list of all stored tracks, along with the codes that represent each CD. The user could then print out the codes associated with each CD, for later quick access using the direct access functionality.

While the hard disk is connected to the computer, the user could also take advantage of the computer's hardware to store additional tracks to the hard disk. This might be advantageous, for instance, if the computer's CD player could read and store CD data more quickly than the system's player.

The computer might also provide the capacity to create playlists and to look up metadata for stored tracks from metadata databases that are not available to the item selection system. Finally, the user would be able to save the stored track collection to his computer for backup purposes.

### User interface

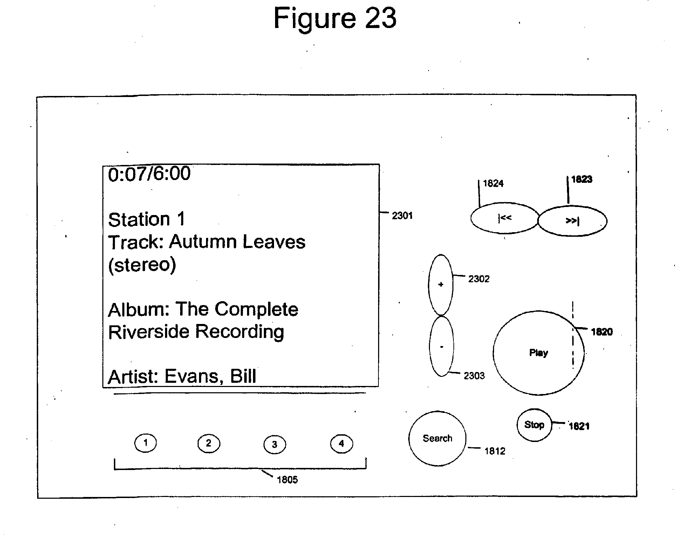

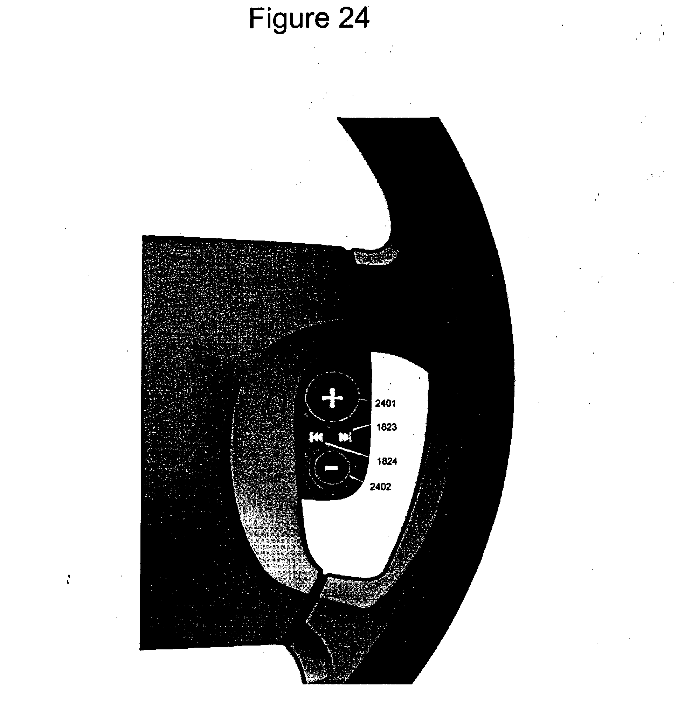

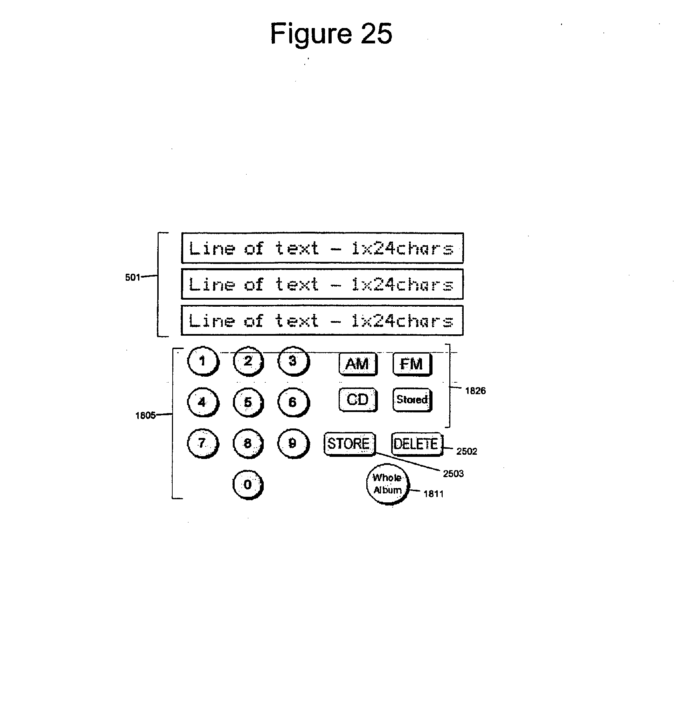

The user interacts with the selection system through interface mechanisms that depend on the platform in which the system is embedded. For instance, as shown in figure 18, the user may employ a remote control. Or the system may be controlled by a control panel, as in figure 23, when embedded, for example, in a home entertainment system. When installed in a car, the system may have certain controls positioned on the steering wheel, as in figure 24, with the remainder of the controls on the dashboard, as depicted in figure 25. Where the system controls the selection of features in computer software, the user interface would be provided by the software itself. Some of the user interface elements described below may not be applicable to non-musical tracks.

The remote control in figure 18 depicts most of the functionality available to the user, although the controls themselves may be located on a console, as selections from an on-screen menu, or elsewhere. The power may be controlled using a standard on/off button 1816. The user may mute the sound with a mute button 1818. The user may choose the source of tracks with a set of buttons 1826. Alternatively, there may be a single button that cycles through the sources available to the system. When the system is in any source mode other than stored tracks, the user may press and hold the "Stored" button 1817 to instruct the system to store the current track to its hard disk. Alternatively, as in figure 25, the system may provide a separate button 2503 to allow the user to store the current track. It also may provide a button 2502 to allow the user to delete the current track, if the system is playing stored tracks. Alternatively, this button might provide functionality to delete all tracks from the current CD or album.

The user can access the system's advanced settings using a settings button 1801. When in DVD mode, the special features and information encoded on the DVD may be accessed with a DVD menu button 1804. Either of these menus may be exited with the exit button 1803. Navigation within these menus is accomplished with the arrow keys 1825. The enter key 1802 is used to accept a selection in either of these menus.

The user may control the volume with the volume key 1826. The current user station (see "User stations and presets") may be changed, when playing in automatic selection mode, and the currently playing track may be changed when in input modes that support changing the track, using a button 1827. The current user station may also be changed by selecting a new station directly from the keypad 1805.

From any mode other than playlist mode, the user may add a track to the playlist, when the track is playing from the system's hard disk, by pressing and holding 0. The user may enter playlist mode by pressing 0 once on the keypad 1807. The user can revert to the previous play mode by pressing the button designated for this purpose 1819.

Control over the currently-playing track may be exercised using standard transport controls. The user may begin playback using a play button 1820; pause playback using a pause button 1822; and stop playback using a stop button 1821. Additionally, the user may skip to the next track using a next track button 1823, or return to the previous track using a button 1824.

When playing tracks on the hard disk, the playback mode may be adjusted using buttons 1811, 1806, 1810, and 1813. The whole album button 1811 causes the system to play all tracks on the album from which the current track was recorded. The changer button 1806 causes the system to switch to Virtual CD changer mode (see "Modes of operation"). The smart play button 1810 causes the system to switch to automatic selection mode. The bins button 1813 causes the system to switch to bins mode. The user may enter search mode by pressing the search button 1812.

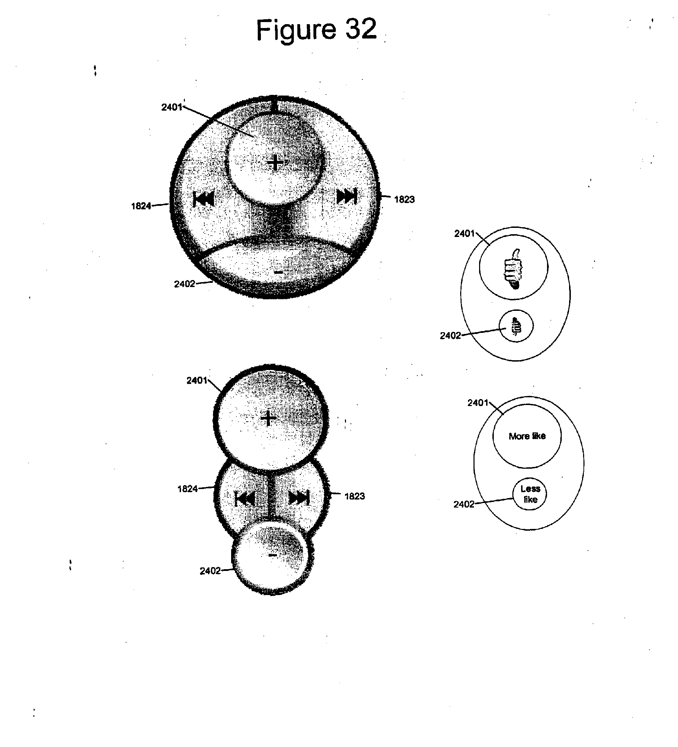

The system includes a feedback mechanism so that the user may indicate reactions to (preferences for) tracks, for example, a currently playing track. This may be accomplished by providing simple + 1815 and - 1814 rating buttons. In other examples, as depicted in figure 23, the + button 2302 is located above the - button 2303 and the two can serve to scroll a preference value between a maximum and a minimum. In other examples, as in figures 24 and 32, the + button 2401 may be larger than, and above, the - button 2402. In some examples, these buttons serve the dual purposes of being the rating buttons when the system is in the smart play mode and as scroll buttons when the system is in other modes of play. Other indicators may be used as well. For instance, instead of + and -, the system may provide a thumbs-up and a thumbs-down indicator. The buttons might also be color-coded (for instance, a red button for a negative reaction, and a green button for a positive reaction).

In addition to the feedback buttons, some embodiments of the system may provide an undo button. This button would completely undo the effect of a previously actuated feedback button on the stored tracks graph (see "Metadata"). It would also be possible for a user to reduce the effect of an unintentional preference indication by returning to a prior track and then indicating the opposite feedback from what was given on the prior playing of the track.

A wide variety of mechanisms could be provided in the interface to enable a user to indicate a positive or negative reaction to a track. More than two buttons could be provided to permit explicit indication of preference from among more than two options. Conversely, the use of a single feedback button would be possible, either a single positive feedback button or a single negative feedback button, or a single button that can be pressed for a time period that would be indicative of the level of preference of the user. Although not as simple, buttons that are meant to provide other kinds of feedback than simply like or dislike would be possible, for example, buttons that would represent types of emotional reactions to a track, such as happy, sad, and indifferent. The mechanism for feedback need not be buttons but could be knobs, dials, thumbwheels, touch screens, speech recognition, biometric readers, or any other device that can receive a user's input. The shapes of the buttons can be different from the shapes shown in the figures.

The shape, contour, location, and other aspects of the feedback devices may be selected to give the user intuitive tactile sensations that correspond to the functions of the buttons. For example, placing the + button above the - button and making the plus button larger than the - button may convey an intuitive sense of the meaning of each of the buttons. The surface contours of the two different preference buttons can be arranged to indicate their meaning intuitively. For example, the + button can have a recessed surface (which is typically sensed as being comfortable) and the - button can have a raised surface (which is typically sensed as being uncomfortable).

It is also desirable to place the preference button or buttons in close proximity to each other and to the one or more principal transport buttons, for example, close enough so that the user can press any of those buttons by motion only of his finger without motion of his whole hand. As shown in figure 24, one useful way to cluster the buttons is in an arrangement in which the + and - buttons are above and below each other and the transport back and transport forward buttons are immediately to the left and right of the vertical axis that joins the + and - buttons. When mounted on a steering wheel, for example, the user can use his thumb to rate and transport without moving his whole hand. In addition to being convenient, such an arrangement may be safer than others for use in a vehicle.

The system may provide feedback to the user with respect to the expressed preferences and other matters. In one approach, shown in figure 23, feedback may be provided on a built-in screen 2301. In another approach, shown in figure 25, the feedback may be provided on an LCD display 2501. The feedback could include identification of the track being played, the user station being played, the length of the track, the elapsed time, and an indication of the system's interpretation of the user's likely preference level with respect to the track being played.

Some embodiments may augment or replace the buttons and display described above by a voice response system. The system would provide oral feedback to the user, and would listen for oral commands. Alternatively, the system could provide oral menu choices, which may be selected by a button press or a verbal response.

### Display

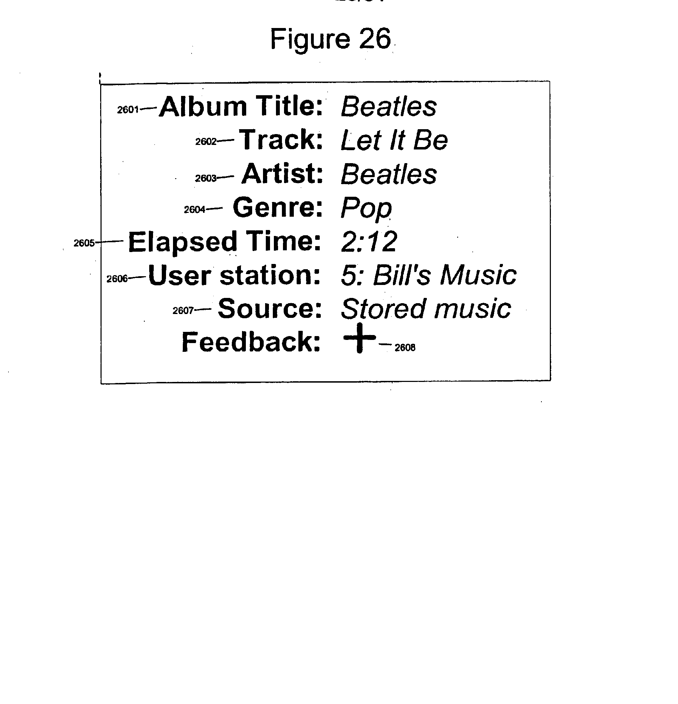

In embodiments that provide feedback to the user using an on-screen display, when the system is playing from stored tracks, the system may display information about the currently-playing track, as depicted in figure 26. The system may display the name of current album 2601; the title of the current track 2602; the name of the artist 2603; the genre 2604; the elapsed time in the current track 2605; which user station is currently playing 2606 (see "User stations and presets"); and what the source of the track is 2607.

In search mode, as depicted in figure 9, the system may display a menu permitting the user to search by genre 904, artist 903, track 902, or album 901. The system may display the scope of the current search results 905, which could initially be the entire set of stored tracks. In some examples, the initial scope of the search is based on the currently playing track. The user can then easily select similar tracks, for instance, by the same artist, or on the same album, or in the same genre, relatively quickly.

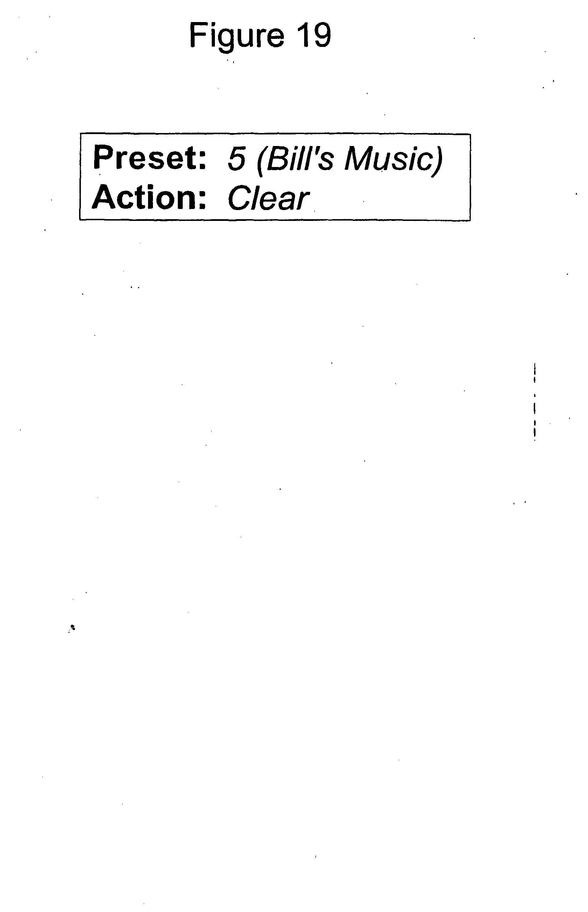

When the user wishes to edit a preset or a user station, the system may display a screen as depicted in figure 19. If the preset is not a user station, the user may add or delete a given track to or from the preset. If the preset is a user station, the user may give it explicitly positive or negative feedback with respect to the station.

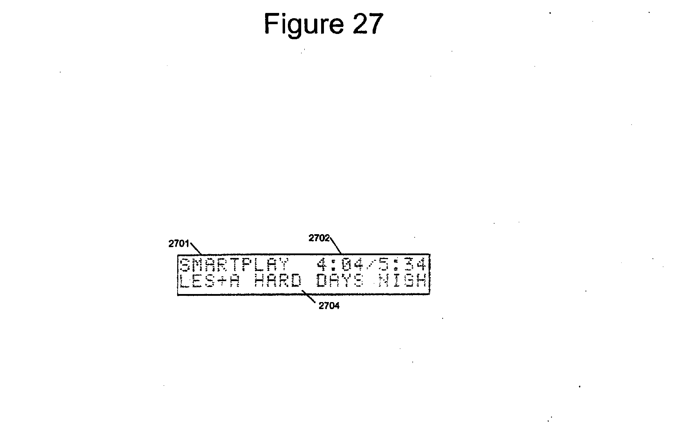

When a smaller display is necessary, such as in an automobile or in a portable stereo system, the display could take the form shown in figure 27. The system would continuously display the current mode 2701 and the elapsed time 2702. It could also scroll across the screen information about the current artist 2703 (e.g., "The Beatles") and the title of the current track 2704 (e.g., "Hard Day's Night").

When the user presses an explicit feedback button (e.g., buttons 1814 or 1815 in figure 18), in any embodiment, the display could acknowledge the feedback (e.g., by temporarily displaying an acknowledgement message such as "Feedback acknowledged"). In some embodiments, the acknowledgement would be displayed upon receipt of implicit feedback as well as explicit feedback.

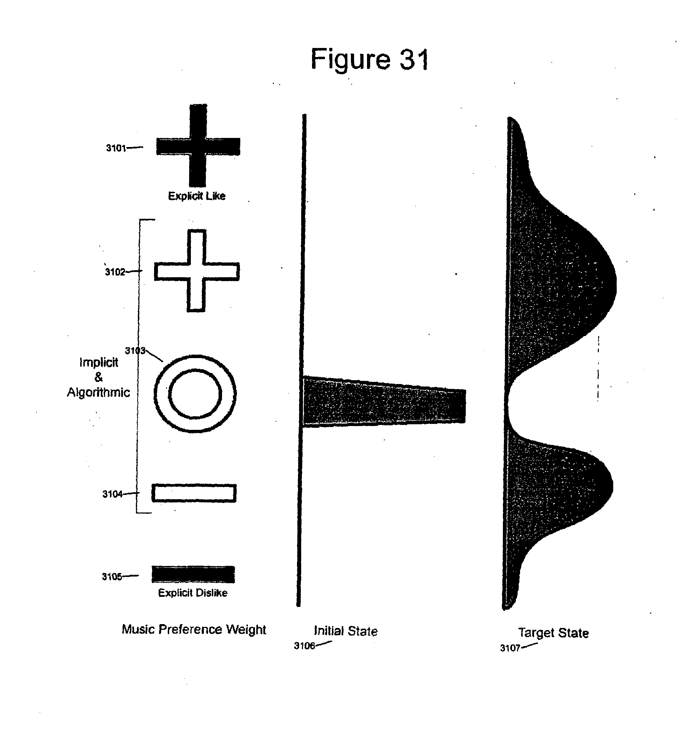

When the system is playing a track the display could show an indicator 2608 (figure 26) that represents the system's understanding of the preference level of the user with respect to that track. The indicator could be, for example, one of the five icons shown in figure 31. The five icons could include a solid plus 3101, an outline plus 3102, a circle 3103, an outline minus 3104, and a solid minus 3105. Other icons, other numbers of icons, and other meanings of icons could be used as well.

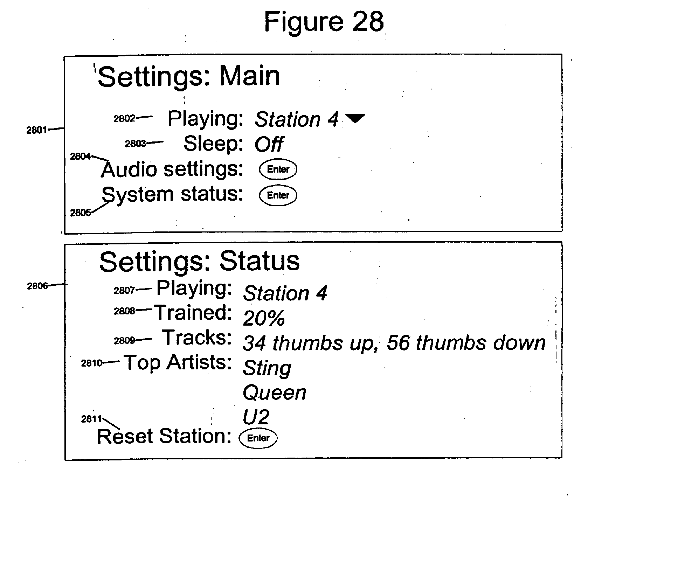

When the user enters a settings mode, see figure 28, a settings screen 2801 will appear. The screen may allow the user to change the currently-playing preset or station 2802. It may allow the user to configure the system 2803 to turn itself off after a user-specified amount of time, or to turn itself on at a specified time of day. It may permit the user to adjust standard audio settings 2804 such as treble, bass, and balance. It may permit the user to view and modify advanced settings 2805.

If the user chooses to edit advanced settings, a screen such as 2806 may appear. There, the system will display the currently-playing station 2807; display information about how many tracks have had some feedback recorded 2808 and what that feedback is 2809; and display the artists with the highest feedback ratings in the current station 2810. It may also permit the user to clear all information in the current station 2811.

If the system uses voice synthesis rather than on-screen display, similar information and options could be presented to the user orally.

### User stations and presets

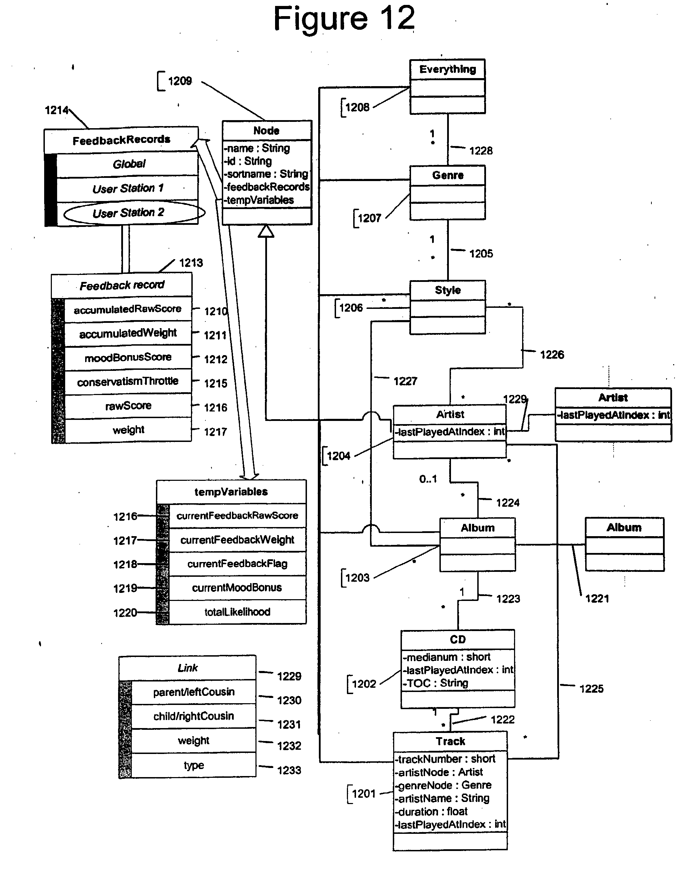

Conceptually, a preset represents information about each stored track that affects the system's selection of which tracks to play. The mechanism by which the system uses this information depends on the current mode, and some preset information will only be applicable to certain modes. For instance, when in tracks, bins, or virtual CD changer mode, a preset will contain simple yes/no data for each stored track or album, representing whether that track or album is in the current preset or not. In user station mode, a preset will contain information the system uses to select tracks in automatic selection mode. For instance, in figure 12, it might contain the feedback record 1213 for each node in the stored track graph (see "Metadata").

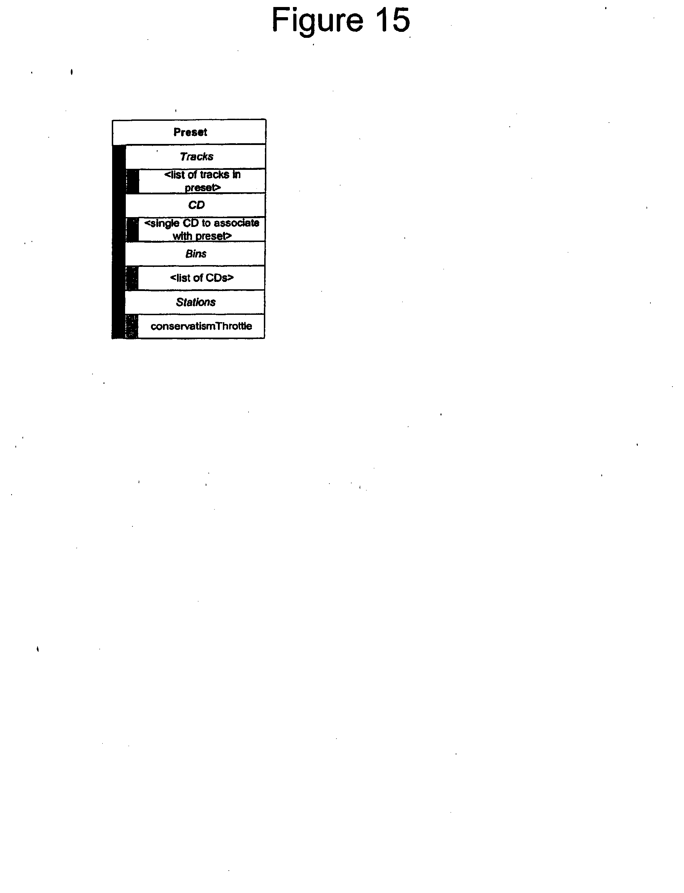

The selection system may maintain a set of presets of arbitrary number (see the database schema of figure 15). For example, the system could maintain four presets, each represented by a button or other user interface item on the physical user interface labeled one through four (see figure 23 item 1805). While a track is playing in any mode, the user can specify that the track should be added to a given preset, for example by holding down the corresponding button. When the system is in automatic selection mode, this has the same effect as giving the current track a positive rating. The user activates a preset by pressing the corresponding button. Each preset can be assigned a number or name for purposes of display and selection.

As shown in figure 15, the system may maintain at least three types of presets. One permits the user to assign individual tracks to a preset to create a play list. The second permits the user to assign a CD or group of CDs to a preset to play tracks from those CDs. The third type of preset is called a user station. In addition the user can set a CD preset to play a single CD.

A user station is a preset used in the automatic selection mode. Each user station associates a probability with each track stored on the system. The probabilities are generated by the automatic selection algorithm, described below, and are dynamically updated based on, for example, user indicated preferences, either implicitly, explicitly, or a combination of both. While a preset is in use, selection of tracks to be played is based on a specific set of probabilities associated with the entire collection of tracks, stored in the preset. Several presets can be defined as a way to play tracks that are selected based on different probabilities of items in the entire collection.

In some embodiments, user stations may be associated with individual users. Thus, if there are three users of the system, user station 1 may reflect user 1's preferences; user station 2 may reflect user 2's preferences; and user station 3 may reflect user 3's preferences. User station 1 would play selections based on scoring of tracks that is derived from user preferences indicated during the playing of tracks by user station 1, and so on.

Some embodiments may permit automatic identification of the user, and automatic use of his presets. This may be accomplished by means of biometric identification. For instance, the system may be equipped with voice recognition capability and the user may be identified by the sound of his voice. Once identified, the system could switch to that user's station automatically. Other systems may use fingerprint identification, retinal scans, or other biometric measurement techniques. Still other systems could interface with external identification devices. For instance, a system embedded in an automobile might switch to user 1's station when the user changes the driver's seat position to a previously stored preferred position of user 1.

In some cases, instead of updating a preset automatically each time the system receives feedback from the user, the preset could be updated only upon explicit instruction from the user. In that way, the user can return to a preferred preset even after a session in which the preset was used to select a sequence of play items.

### Modules

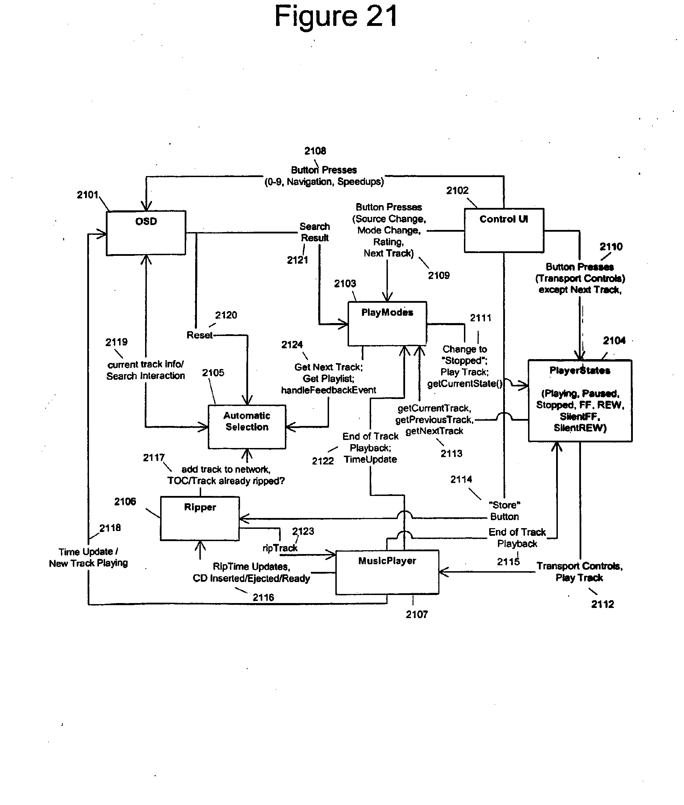

Figure 21 represents the functional modules contained in one possible embodiment, and the nature of their interaction. In this embodiment, the MusicPlayer 2107 controls the playing of tracks in response to inputs and provides status information on the playing of tracks in the form of EndOfTrackPlayback and TimeUpdate messages 2122 to the PlayModes module 2103. It sends TimeUpdate and NewTrackPlaying messages 2118 to the Onscreen Display (OSD) module 2101. It sends an EndOfTrackPlayback message 2115 to the PlayerStates module 2104. It sends RipTimeUpdate, CDInserted, CDEjected, and CDReady messages 2116 to the ripper module 2106 (see below), to tell the ripper module how much time is left in the ripping process, when a CD has been inserted, when a CD has been ejected, and when a CD is ready to be stored.

The ripper 2106 responds to store commands from the control user interface module 2102 and sends messages 2117 to the automatic selection module to add stored tracks to the stored tracks graph (see "Metadata"). It can also ask the automatic selection module 2117 if a given track has already been stored in the graph. The ripper module sends ripTrack messages 2123 to the MusicPlayer module to instruct the MusicPlayer module to actually store the track. The MusicPlayer sends a confirmation message when it is completed.

The PlayModes module 2103 responds to button presses 2109 from the control user interface. It sends messages 2111 to the PlayerStates module 2104 to change the current state to "stopped" or "playing." It can also query 2124 the automatic selection module to find out what track to play next, or to get the current playlist. It can also instruct 2124 the automatic selection module to handle a feedback event. It also maintains a track history and state for user stations (see "User stations and presets") and for the Virtual CD Changer (see "Modes of operation").

The PlayerStates module 2104 responds to transport control events from the user's control and commands from the PlayModes module. It also acts as an interface between the remote control and the MusicPlayer module. It passes on transport control and play-track instructions 2112 received from the control user interface and the PlayModes module to the MusicPlayer module. It can query 2113 the PlayModes module for the current, previous, and next track.

The On-Screen Display (OSD) module 2101 presents information about what is currently playing to the user. It handles user interactions for "resetting" or otherwise editing presets, and can send a reset message 2120 to the automatic selection module. It also displays the user interface for the search interface, and sends the search results 2121 to the PlayModes module. It queries 2119 the automatic selection module to retrieve search results (given search parameters provided by the user to the OSD module). It also queries 2119 the automatic selection module for information about the currently-playing track, to present to the user.

The automatic selection module 2105 selects which tracks to play when the unit is in Automatic Selection mode (see "Modes of operation"). It maintains all feedback information for all user stations (see "User stations and presets"). It conducts searches when requested by the user via the OSD module, converting queries formulated by the OSD module into a list of tracks to play. It supplies the OSD module with information about the currently-playing track. It responds to requests from the user interface to edit data in the stored tracks graph. Since this module maintains the stored track graph, when the system is in Virtual CD Changer mode, tracks mode, or bins mode, the PlayModes module must query 2124 the automatic selection module to ascertain from this data structure what the next track to be played is.

The control user interface (ControlUI) 2102 module dispatches user events. It sends button presses 2108 to the OSD module, for user interaction, for instance in search mode. It sends source change, mode change, rating, and next track messages 2109 to the PlayModes module. It sends transport control messages, except next track messages, 2110 to the PlayerStates module. It sends store button presses 2114 to the Ripper module.

### Storing tracks

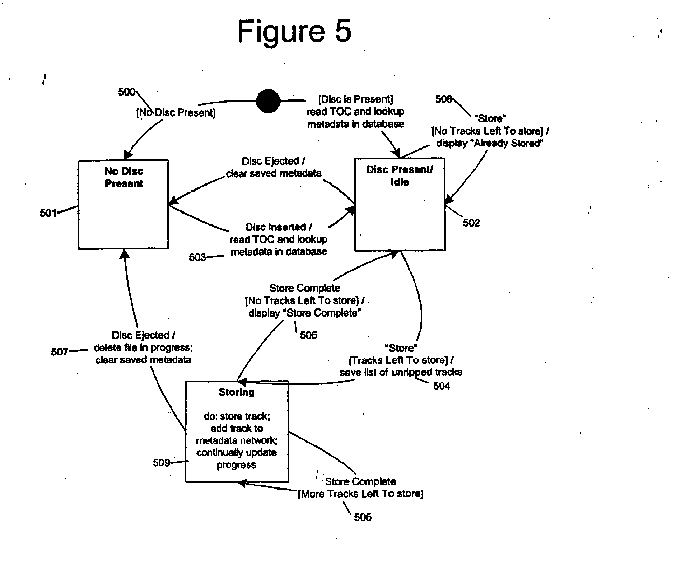

Automatic selection mode, tracks mode, bins mode, virtual CD changer mode, and search mode all require track data to have been stored onto the system's hard disk. This is done by the ripper module, which operates as depicted in figure 5.

When no disc is inserted (and no other source is operating) 500, the module is in the "No disc present" state 501. When a disc is inserted (or the user begins to play from another source, e.g., radio or cassette tape) 503, the system reads the Table of Contents (TOC) data, if available (see "Data storage," below) and enters the "Disc present/idle" state 502. When the user presses a store button, if there are still tracks left to store 504, the system saves the list of unstored tracks and enters the "Storing" state 509. If there are no tracks left to store 508, the system displays an error message.

In the storing state, while other modules handle playing the source, the tracks are simultaneously recorded to the hard drive. When storage of all tracks is completed, the module may display a confirmation message to a user 506 and return to idle state 502, or alternatively it may return to the other source mode and begin to play the source from the start. If the source is removed before all tracks have been stored 507, the system returns to the no disc present state 501. If the source is removed, the user presses stop, the user changes sources, the system runs out of hard disk space, or some other event occurs rendering it impossible for the system to continue storing the current track, the stored data for the current track is deleted.

In other examples, the tracks would not have to be played while being stored onto the unit's hard drive. Track storage could then be completed in a shorter time. The store module operates independently in these embodiments, and the user may continue to listen to any track from any source, including the system's hard disk, while the store module is storing tracks.

Other embodiments permit "background storing." This feature would permit the user to indicate that a given track should be stored. The system would defer the actual storage until a later time, when the system is not in use. If the user engages the system while it is storing a track in the background, the system aborts the storage function. If the user plays a track from a CD that is queued for background storage, the track may be stored when the user plays it.

Background storage might be combined with the standard storing feature as follows. Standard storing could normally be used; but if the system runs out of hard disk space, the user removes the CD, or some other event occurs rendering storage of the track impossible, the system could queue the track for background storage, and store it when it later becomes possible.

Some embodiments perform a minimal amount of processing at storage time, and defer advanced processing until the system is idle. In these embodiments, the amount of time during which the original medium is needed is reduced, with most of the signal processing taking place at idle time.

### Metadata

By metadata we mean information about tracks other than the underlying track data itself. There are many examples of potential metadata sources, and types of hierarchies. For instance, if the stored tracks are musical in nature, the system could utilize a digital signal processing algorithm to analyze, for instance, the amount of bass in a particular track. It could then assign the track to a category such as "Heavy bass," "Little bass," or something in between. Alternatively, if the tracks represent non-musical data, metadata appropriate for that type of data would be used. For instance, if tracks represent commands in computer programs, appropriate metadata categories might be "Scope" (e.g., document-level commands, global commands, or selection-level commands); "Type" (e.g., font, style, preferences, layout); menu (e.g., File, Edit, View); and command name (e.g., Insert Page). As with music data, this metadata could be prepackaged with the software, or could be available separately, for instance, through the Internet. In the sections that follow, the example of stored music will be used. The description that follows demonstrates the creation of a stored tracks graph suited for representation of characteristics peculiar to musical data, such as artist, genre and style. In other examples, depending on the type of data being stored, different structures with different relationships among the nodes would be used.

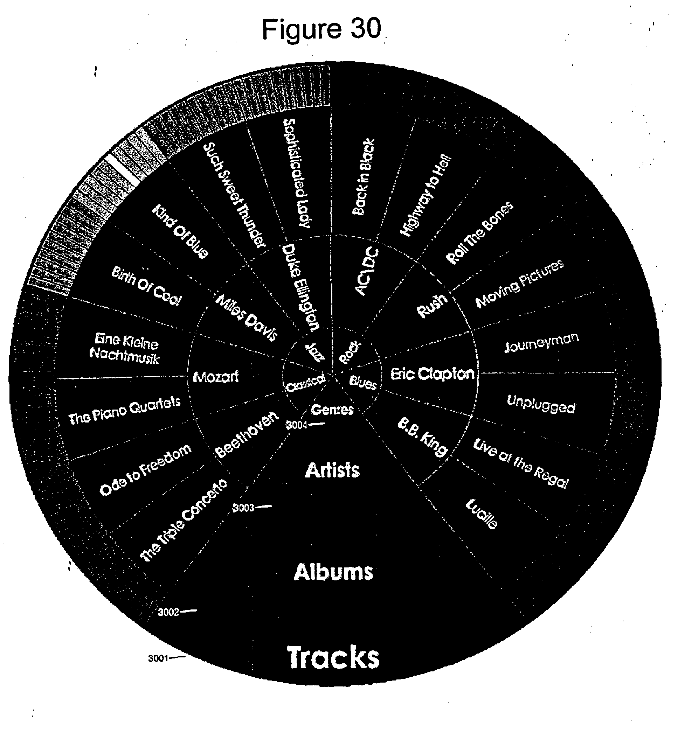

Returning to the music example, the metadata takes a structure such as the one depicted in figure 30. Individual tracks 3001 together make up an album 3002; multiple albums make up the works of an artist 3003; and multiple artists together form a genre 3004. Many implementations will add additional layers, as described below.

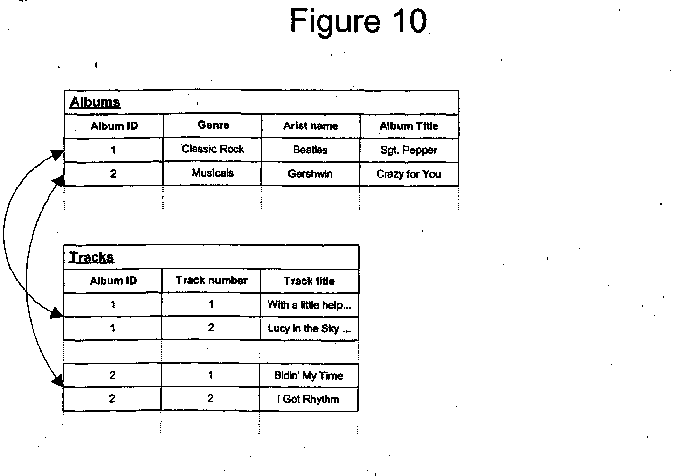

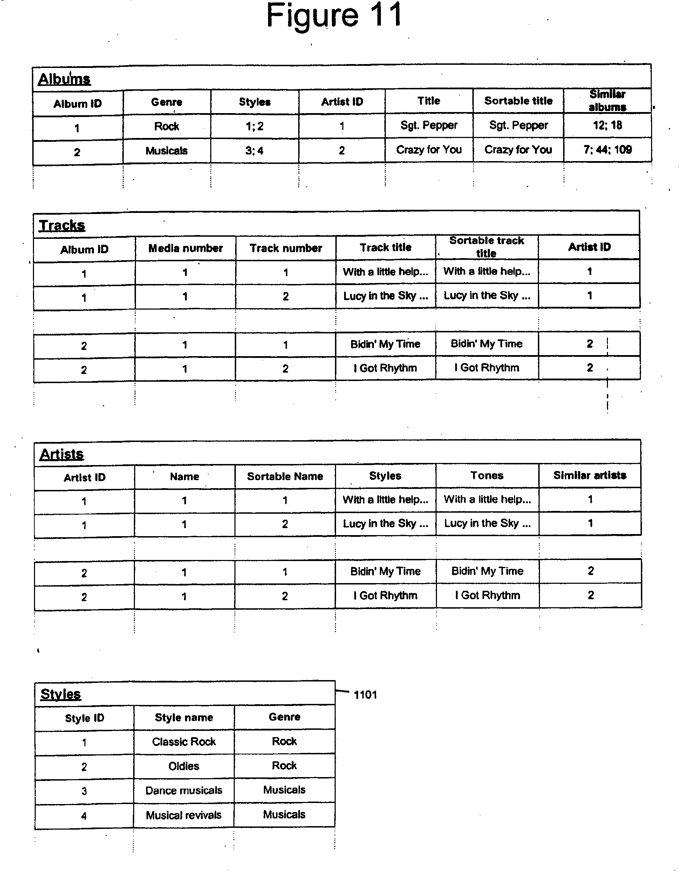

The automatic selection mode may take advantage of, for example, any of the following three levels of metadata support:
(1) No metadata at all.
(2) An externally supplied database of metadata, indexed by a unique album identifier, potentially containing the following columns: "Genre," "Artist name," "Album Title" and a list of "Track Titles" ordered by "Track Number". One source of such data is Gracenote's CDDB database; we will refer generically to any data with these fields as "CDDB Data." See figure 10.
(3) An externally supplied database, including an album table, indexed by a unique album identifier, potentially containing columns for "Genre," a list of "Styles", a unique artist identifier, "Album Title," "Sortable Album Title", and a list of "Similar" albums (referenced by their unique ids). The database also includes an artist table, indexed by a unique artist identifier, and columns for "Artist Name," "Sortable Artist Name," a list of "Styles", and a list of "Similar" artists (referenced by their unique ids). The database also includes a static "Style" table, where each style is linked to a "Genre." The database also includes a "Track" table, indexed by unique album identifier, with columns for "media index" (the sequential disc number in a multi-disc set), "Track Number", "Track Title", "Sortable Track Title", "Artist Unique ID". One source of such data is the All-Music Guide. We will refer generically to data with these fields as "AMG Data." See figure 11.

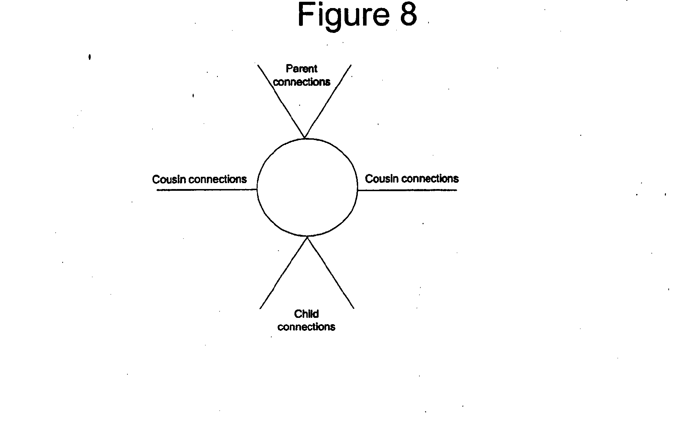

Other examples of selection systems would be capable of working with any metadata format which can be converted into the selection system's internal graph format. The system's "stored tracks graph" is a graph with nodes at different levels of generality. Nodes may be connected by ancestor-descendant relationships, or by cousin-cousin relationships, as depicted in figure 8. The levels of generality, and thus all ancestor-descendant relationships, are transitive.

The data structure for the system's stored tracks graph is summarized in figure 12. Each item of metadata forms a node in a semi-hierarchical network. There are a number of different types of nodes described in the figure, each of which derives from a generic node object. The node object 1209 (and thus every node) contains fields for a "name" (which is used when something must be displayed to the user), an "id" (a unique identifier), a "sortname" (a sortable version of "name"), and a set of feedback records 1214. The feedback records consist of an array of records 1213, one for each user station, plus one maintained globally, that keep track of all feedback, score, and play-history information.

The hierarchy is represented by the vertical dimension and the inter-node connections in the figure. A connection from node A at one level to node B at a higher level (i.e., an ancestor-descendant relationship) implies that the entity represented by node A is part of or was performed by the entity represented by node B.

Reading upward from the bottom of the figure, a track node 1201 contains the standard node fields, and additionally contains fields for trackNumber (its position on the CD), its artist and genre (when there is metadata available), and its duration. Each track node is connected 1222 to a single CD node 1202, and tracks from multi-artist CDs are connected 1225 to one or more artist nodes 1204 (when this metadata is available).

A CD node 1202 stores the disc's Table of Contents (TOC) string, and an ordinal "media index" (when available) representing the disc number in a multi-disc set. Each CD node is connected 1223 to a single Album node 1203.

An Album node 1203 represents either a single CD or a multi-disc set. If the album contains tracks from a single artist, it is connected 1224 to a single artist node 1204; if it contains tracks from multiple artists, it is not connected to any artist nodes. Instead, the track nodes 1201 are connected 1225 directly to the artist nodes 1204. An album node may be connected 1227 to zero or more style nodes 1206. An album node may also be connected 1221 to zero or more "Similar" Albums by cousin-cousin links.

An artist node 1204 represents a single performer where a performer is defined as one or more individuals who recorded one or more of the tracks. It may be connected 1226 to zero or more style nodes 1206. An artist node may also be connected 1229 to zero or more "Related" artists by cousin-cousin links.

A style node 1206 represents a sub-genre of music. It is connected 1205 to at least one genre node 1207. When the metadata does not provide both style and genre information, the genre may be determined from the style by means of a static look-up table (see 1101, figure 11). For instance, style "Classic Rock" maps to genre "Rock".

A genre node 1207 corresponds to a broad class of music (e.g., "Rock", "Classical", "Jazz"). It is connected 1228 to the root node (the "Everything" node) 1208.

The root node 1208 is an ancestor of all other nodes. It represents the entire music collection.

Connections between nodes are represented by data structure 1229. Connections are two-way (and thus contain a parent or left cousin 1230 and a child or right cousin 1231), and each connection has a numeric weight ("link weight") 1232 that representing the strength of the relationship and a type 1233 that specifies the nature of the relationship. The link weights may be derived from the external metadata information, they may be static, or they may be all equal to 1.

In the case in which no explicit metadata is available, the system has no direct way to classify the tracks. For instance, when a new musical CD is purchased and loaded into the system, although the system would know the relationships among the tracks on the CD, it would not know each track's genre or style. It would thus be unable to create nodes in appropriate locations in the stored track graph. Some implementations address this concern by prompting the user (using speech synthesis, for example) for information that is needed and then using the results to build the metadata into the system. For example, the system could ask "What genre would you say this is?" The spoken result, "Jazz," could be recognized and stored.

### Types of user feedback

There are five events that the selection system uses to learn from the user and to determine user preferences (although five events are described, other kinds of events are also possible):
(1) The user presses a button or in some other way indicates an explicitly positive reaction at some level (for example, "Rate +");
(2) The user presses a button or in some other way indicates an explicitly negative reaction at some level ("Rate -");
(3) The user presses a button or in some other way indicates that the system should skip to the next track or otherwise terminate the current track, provided, for example, that the button press occurred within a certain pre-specified time period after the track has begun playing (e.g., greater than two seconds and less than two minutes) ("Next track");
(4) An item plays from start to finish, provided that there has also been some type of user interaction within a set time period, e.g., one hour centered on the time when the track began, indicating that the user likely listened to the track and allowed it to complete deliberately ("track completes successfully");
(5) The user increases the volume ("Volume +").

The first two items are explicit acts of the user to tell the system something about his preferences. The remaining items represent only implicit information about the user's preferences. Other kinds of feedback about preferences, both explicit and implicit, could be used.

### Scoring a node

In the item selection system, nodes of the stored tracks graph are assigned scores based on feedback from the user. Because of the connections between the nodes in the graph, feedback applied to one node (e.g., a user response to a track) potentially affects all nodes in the graph. Thus, the system may make deductions about the user's responses to each stored track, on the basis of the user's response to just one. Furthermore, the system may keep track of short-term and long-term preferences. This feature allows the system to quickly adjust to a user's changes in mood, without losing information about the user's general long-term track preferences.

Figure 31 shows two track score distributions, representing the initial distribution of scores among tracks, before any feedback is received, and one example of a desired final distribution. Initially 3106, the system has received no user feedback; thus the user is presumed to be neutral 3103 to every track. As more explicit and implicit feedback is received, the system makes deductions regarding tracks that are similar to the ones for which explicit feedback has been received. Eventually, one goal of the system may be to achieve a double-bell-curve distribution 3107. The user will have given feedback, either explicitly positive 3101 or negative 3105, or implicitly positive 3102 or negative 3104, regarding a few tracks. With that information, the system will deduce the user's preferences, assigning positive or negative scores to the remainder of the tracks based on the unrated tracks' relationships with the rated tracks.

As previously discussed, the selection system maintains a graph representing every track, metadata regarding that track, and the relationship between that and other tracks. As will be described in more detail, the system takes advantage of this graph structure in order to propagate feedback to nodes other than the track currently being played. Additionally, as described more fully below, the nodes may optionally track long-term preferences separately from short-term preferences.

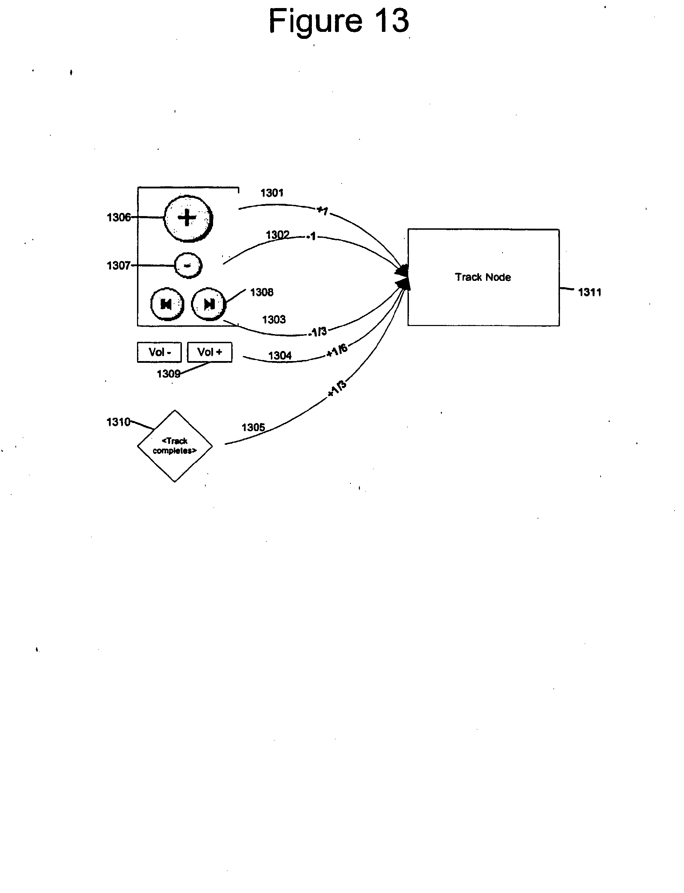

Long term preferences may be tracked as follows, although the numerical weights are provided merely as one possible example (see figure 13):
(1) When the user presses the plus button 1306, the system sends 1301 a +1 feedback event to the track node 1311.
(2) When the user presses the minus button 1307, the system sends 1302 a -1 feedback event to the track node.
(3) When the user presses the next track button 1308, the system sends 1303 a -1/3 feedback event to the track node.
(4) When a track completes successfully 1310, the system sends 1305 a+1/3 feedback event to the track node.
(5) When the user presses the increase-volume button 1309, the system optionally sends 1304 a +1/6 feedback event to the track node.

These feedback events modify the *accumulatedScore* 1210 and *accumulatedWeight* 1211 variables of the track node 1201 and of all of its ancestors in the metadata network. *accumulatedScore* is equal to the sum of all feedback for that node (positive and negative), and *accumulatedWeight* is equal to the sum of the absolute values of each feedback event for that node. Thus, the ratio *accumulatedScore*/*accumulatedWeight* is always in the range [-1,+1]. This ratio is called the *local score.* If the local score is +1, that means all feedback received has been positive. If the local score is -1, that means that all feedback received has been negative. If *accumulatedWeight* is 0, the local score is defined to be 0.

In some examples, *accumulatedWeight* and *accumulatedScore* are bounded. If *accumulatedWeight* exceeds a fixed boundary value, both variables are multiplied by the ratio *fixedBoundaryYaluelaccumulatedWeight,* thereby preserving the ratio between the variables while keeping them within the specified bounds.

Short-term mood-based preferences may be handled similarly. For example, if the user normally enjoys rock music, but currently wishes to hear classical music, the system is able to receive his short-term preferences, and adjust, without substantially modifying the long-term preferences. Thus, in this example, the system would quickly interpret the user's feedback to mean that he wants to hear classical music at the moment; but when turned on at a later time, the system will remember that the user mostly enjoys rock.

For this purpose, instead of affecting *accumulatedScore* and *accumulatedWeight,* the affected variable will be *moodBonusScore* 1212. In this configuration, when a feedback event is about to be processed, all *moodBonusScore* variables across all nodes will be reduced toward zero (e.g., by multiplying each value by a fraction such as 0.9). Then, the system will adjust the *moodBonusScore* for the track receiving feedback and each of its ancestors, for instance, by adding +0.1 for positive feedback, or -0.1 for negative feedback. The *moodBonusScore* may be bounded; in the example above, it is guaranteed to be in the range [-1,+1].

A system that maintains both long-term and short-term preference data could function as follows:
(1) A "Rate +" event will make a large positive change to the *moodBonusScore* variable and a small positive change to accumulated variables.
(2) A "Rate -" event will make a large negative change to the *moodBonusScore* variable and a small negative change to accumulated variables.
(3) A "Next track" event will make a small negative change to the *moodBonusScore* variable, and a small negative change to the accumulated variable.
(4) A "track Completes Successfully" event will make a small positive change to the *moodBonusScore* variables and a small positive change to the accumulated variables.
(5) A "Volume +" event makes a small positive change to the *moodBonusScore* and a small positive change to the accumulated variables.

Thus, the accumulated variables have infinite memory, and the *moodBonusScore* variables have limited memory (because they decay toward zero).

Furthermore, in some examples, the system permits seeding of scores from the search screen (see "Modes of operation"). That is, the user may locate a track on the search screen, and press one of the explicit rating buttons to apply the feedback to the node and its parents.

In some implementations, pressing the "Rate -" button causes the current track to stop playing and the next track to begin. To the user, this has the same effect as pressing the "Next track" button, but it has a stronger effect on the immediate behavior of the system.

In other implementations, in addition to causing the current track to skip as above, there is a short pause before each new track is played. The name of the track to be played appears on the on-screen display. The user may press "Rate -" before the track plays to immediately skip to the next track. In this case, the user provides explicit feedback without the track ever having been played.

Each node in the graph maintains its own score-related data. Each node contains a set of feedback records 1214 (see figure 12). This set includes one group of variables for each preset, plus an additional global group. Each group contains three numeric variables:
*accumulatedScore, accumulatedWeight,* and *moodBonusScore.*

Each track, CD, and artist node also has a single integer-valued variable *lastPlayedAtIndex.* If *lastPlayedAtIndex* holds the value -1, the track represented by that node has never been played by the system. The system keeps a global circular play counter that starts at zero, increments each time a track is played, and returns to zero when it attains a specified value, e.g., 1024. When a track is played, all nodes whose *lastPlayedAtIndex* variable is equal to the global counter value are reset to "-1". For instance, if the fifth track the system played was X, and the system is now playing the 1,029th track, then the global counter value would now be 5 (1029 mod 1024 = 5), and thus track X's *lastPlayedAtIndex,* now 5, would be reset to -1. Thus, the system "forgets" that this track was played. Then, the values of *lastPlayedAtIndex* for the current track, CD, and artist nodes are set to the current value of the global counter. At this point, the expression *(globalCounter-lastPlayedAtIndex) mod 1024* represents how recently a track, CD, or artist has been played, provided that *lastPlayedAtIndex* is greater than -1.

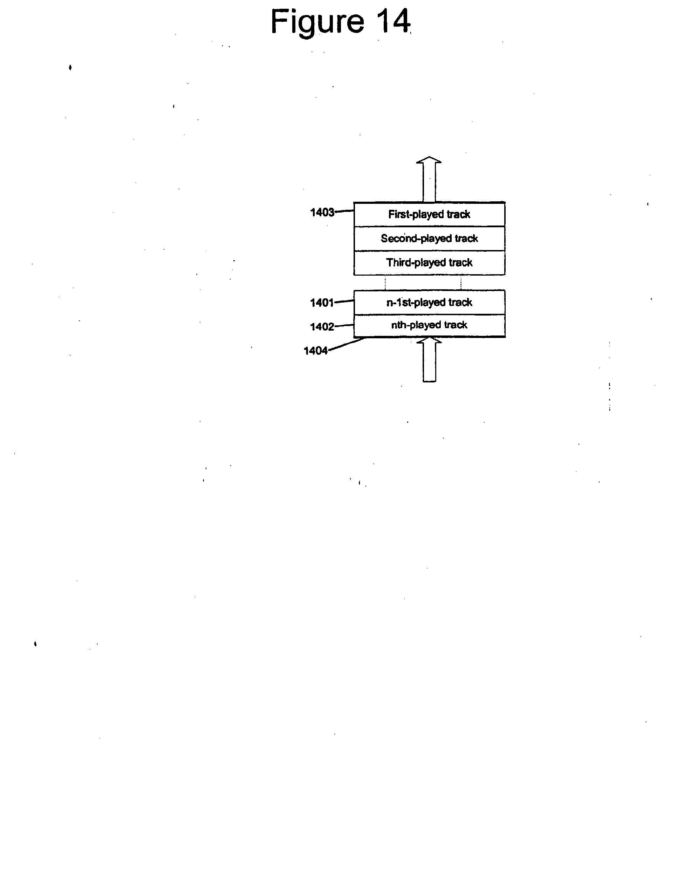

The system also maintains a first-in, first-out list (see figure 14) representing the most recently played tracks for each preset. This play history is only used when the user uses the transport controls to go backward and forward within the play history. Thus, if the system is currently playing track 1402, and the user presses the previous track button, the system plays track 1401. The next track it will play will be track 1402. When the system completes playing track 1402, a new track will be chosen and added to the end of the list 1404, and track 1403, the oldest track, will be removed from the list.

If the user presses previous or next track, and the track that would otherwise be played has been deleted from the hard disk, the system skips that track and plays the track immediately preceding it or following it in the list.

### Data storage format

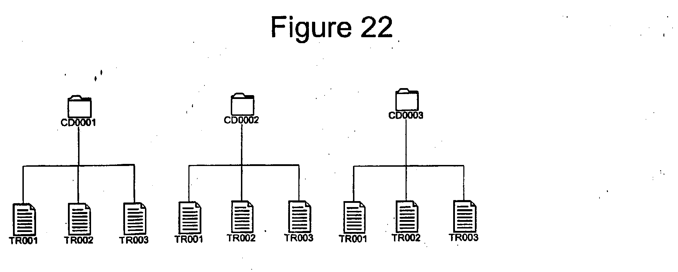

Tracks are recorded from a CD onto a hard disk or other random access storage medium. When tracks represent musical data, each track is stored on the medium as a separate file, potentially compressed in MPEG-1 layer 3 format ("MP3"; a standard defined by the Moving Picture Expert Group), AAC format (Advanced Audio Coding, also defined as part of the Moving Picture Expert Group standards), or other suitable format. Along with each track, table of contents information is stored, if available on the original medium. The index of the tracks on the CD is also stored. The specific format on the new medium is not relevant, so long as the track number and table of contents are available. In some embodiments, separate directories for each album are created (see figure 22). These directories are numbered sequentially, e.g., CD0001, CD0002, etc. Within a directory, track files are sequentially numbered (TR001, TR002, etc.). The table of contents may be stored, for example, as a string in the ID3 header of each MP3 file.

When a track is stored on the hard drive, nodes are added to the stored track graph. As noted earlier, the selection system may obtain metadata from multiple sources for the purpose of building the graph. In some cases, where track data is musical, it searches for data provided by the All Media Guide company (AMG) and data provided by Gracenote's CDDB service. First, the system searches the stored track graph for a CD node whose TOC matches the table of contents of the current CD. If the CD is not present, the system queries the AMG database, using the CD's table of contents as an index. If the AMG database returns a match, the system adds a CD node, and an Album node if it does not already exist, using data from the AMG database. Note that whenever a new node is created, all of its variables are set to zero. The track node is created and added to the network under the newly-added CD node. The system uses the list of similar albums in the AMG database to connect the Album node to other albums in the network. The track node is connected to the Album node. The Album node is connected to the appropriate style nodes, which are created if they do not already exist.

If this is a single artist CD, and the Album node did not previously exist, or if this is a various-artists CD, then the system creates an artist node, if one does not already exist. The artist node is connected to the Album node if this is not a various-artists CD. If the artist node did not previously exist, it is connected to the style nodes specified in the artist's entry in the artist table of the AMG database. If this is a various-artists CD, the system connects the artist node directly to the track node; otherwise, it is connected to the Album node.

Any style nodes that did not previously exist are connected to the appropriate genre nodes (which are created as needed), and any new genre nodes are connected to the root node.

If no metadata was returned, the system may query the CDDB database. If there is a match, the nodes are created as described for the AMG database. If there is still no match, then track and CD nodes are created, along with dummy "Unknown" nodes at the Album, artist, and style levels.

Alternatively, the CDDB database may be queried first. If a match is found, the AMG database is queried second, and the more detailed information from the AMG database, if available, is used to supplement the CDDB data.

As noted earlier, CDDB and AMG data are only two possible types of metadata, and are particularly suited to musical tracks. When other types of data are used, other hierarchies with different levels would be created to map the information made available by metadata appropriate for the data. For instance, where the database consists of issued patents, if the metadata provided is field, inventor, prior art cited, and patent name, a stored tracks graph would be created mapping these metadata fields to the structure described above.

### Propagating feedback

User feedback may be applied to a given node as follows. The system calls a function, *insertFeedbackAtNode,* passing it the *node* to apply feedback to (i.e., the track node that is being played); the integer preset number, the *moodBonus* (representing the change in short-term score), and the floating point *rawScore* and *weight* deltas (representing the change in long-term feedback). First the selected node is initialized:
*node.currentFeedbackFlag* 1218 = 1
*node.currentFeedbackRawScore* 1216 *= rawScore*
*node.currentFeedbackWeight* 1217 = *weight*
*node.currentMoodBonus* 1219 *= moodBonus*

Next, the system traverses the graph, ensuring that all nodes of a lower level are visited before any higher nodes are. As each node is visited, if the node's *currentFeedbackFlag* is set, each of the node's cousin links is considered. Temporary variables *tbonus, tweight* and *trawScore* are initialized:
tweight=node.currentFeedbackWeight*link.weight *COUSIN_PENALTY
trawScore = node.currentFeedbackRawScore * link.weight *
COUSIN_PENALTY * MAX_IMPLICIT_CONTRIBUTION
tbonus = node.currentMoodBonus * link.weight * COUSIN_PENALTY
and if the cousin node's *currentFeedbackFlag* is not set and *tweight* is larger than the cousin node's value for *currentFeedbackWeight,* the cousin node's values for *currentFeedbackRawScore* and *currentFeedbackWeight* are set to *trawScore* and *tweight* respectively. In one example, COUSIN_PENALTY is set to 0.4 and MAX_IMPLICIT_CONTRIBUTION is set to 0.8. If the absolute value of cousin node's *currentMoodBonus* is less than the absolute value of *tbonus,* the cousin node's *currentMoodBonus* is set equal to *tbonus.*

Next, still assuming that the current node's *currentFeedbackFlag* is set, each of the node's parent links is considered in turn. Temporary variables *tbonus, tweight* and *trawScore* are initialized:
tbonus = node.currentMoodBonus*link.weight
tweight = node.currentFeedbackWeight*link.weight
trawScore = node.currentFeedbackRawScore*link.weight

If the parent node's value *ofcurrentFeedbackWeight* is less than *tweight,* then the parent's *currentFeedbackFlag* is set to 1, and its values of *currentFeedbackRawScore* and *currentFeedbackWeight* are set to *trawScore* and *tweight* respectively. If the absolute value of the parent node's *currentMoodBonus* is less than the absolute value *of tbonus,* it is set equal to *tbonus.*

The system repeats this process with the current node's parents.

After all of the nodes have been visited, they are visited again in reverse order (starting with the Everything node, and working down to the track nodes). As each node is visited a second time, if *currentFeedbackWeight* is non-zero, the node's feedback variables (for the specified Preset) are adjusted as follows:
accumulatedRawScore += currentFeedbackRawScore
accumulatedWeight += currentFeedbackWeight
Each node type may have a weight limit. Although other weights are possible, one example follows:
FeedbackLimit = [ 4.0, # track
10.0, # CD
10.0, # album
20.0, # artist
40.0, # style
60.0, # genre
100.0] # all
If *accumulatedWeight* is now larger than the limit for that kind of node, the *accumulatedWeight* is set to be equal to the limit. If the absolute value of the *accumulatedRawScore* is now larger than the limit, as defined above, for that kind of node, it is normalized to be equal to the limit.

Also, the node's *moodBonusScore* (for the specified preset) is multiplied by (1-*moodBonus)* and then the value of *currentMoodBonus* is added to it. Finally, the values of *currentFeedbackFlag, currentFeedbackRawScore,* and *currentFeedbackWeight* are all zeroed. At this point, the system has propagated feedback to all ancestors and first cousins of ancestors of the selected node.

In one example, the *insertFeedbackAtNode* function is called with only one of four possible combinations of *rawScore, weight,* and *moodBonus:*
1. If the "Rate +" button is pressed, *rawScore = 1.0* and *weight = 1.0,* and *moodBonus =* 0.1.
2. If the "Rate -" button is pressed, *rawScore =* -1.0 and *weight* = 1.0 and *moodBonus* = 0.1.
3. If the "Next track" button is pressed in the appropriate time window, *rawScore =* -MAX_IMPLICIT_CONTRIBUTION*IMPLICIT_PENALTY and *weight =* IMPLICIT_PENALTY, and *moodBonus =* 0.05.
4. If the track plays to completion, *rawScore =* MAX_IMPLICIT_CONTRIBUTION*IMPLICIT_PENALTY and *weight =* IMPLICIT_PENALTY, and *moodBonus* = 0.05.
In one embodiment, the constants may be set as follows: MAX_IMPLICIT_CONTRIBUTION = 0.8 and IMPLICIT_PENALTY = 0.33.

Once the feedback has propagated through the graph, it is still necessary to calculate a node's score, taking into account both short-term and long-term preferences. This involves another top-down traversal of the graph, although this step could be combined with the previous traversal. Starting with the Everything node and working down, first, the system zeros the node's variables *rawScore* 1216 and *weight* 1217. For each parent of the current node (if any), add to *rawScore* the parent node's *rawScore* in that preset (multiplied by the link weight), and add to *weight* the parent node's *weight* in that preset, multiplied by the link weight. After adding in all parent feedback, multiply both *rawScore* and *weight* by PARENT_PENALTY. In an example implementation, PARENT_PENALTY may have the value 0.2. Next, the system adds the node's current Preset values of *accumulatedRawScore* into *rawScore* and the value *of accumulatedWeight* into *weight.*

The system maintains a list of constants, called MOOD_WEIGHTS[GRAPH_LEVELS]; there is one mood weight constant per level of hierarchy in the graph. In one implementation, each MOOD_WEIGHT is zero, with the following exceptions: The MOOD_WEIGHT for the CD level is 1; the MOOD_WEIGHT for the artist level is 1; and the MOOD_WEIGHT for the style level is 2.

The selection system multiplies *moodBonusScore* for the current node by the mood weight for the node's level, and adds this value to *rawScore.* The system then adds the current level's mood weight into *weight.* The system then repeats this process for each of the current node's children.

The ratio *rawScore*/*weight* is defined as the node's score in the specified preset, unless the weight is zero, in which case the score is defined to be zero. Note that a node's score depends on the score ratios of all of its ancestors in the network. Since all nodes are descended from the Everything node, this implies that every feedback event affects the scores of all nodes.

### Selecting the next track

When the system is in "automatic selection" mode, it chooses the next track to play based on each node's scores, combined with the current risk tolerance, and a number of other variables. Thus, in some examples, the track selected to be played may not be the highest-rated track. Every track, even the one with the lowest score, has some probability of being played in each selection cycle, with the exact probability depending on the system's current risk tolerance. The risk tolerance variable attempts to prevent the system from making two mistakes in a row, while achieving a degree of variation that would not be possible if the system merely played the highest-rated track. If the system receives negative feedback, it becomes more conservative to avoid the possibility of a repeat mistake. As it receives positive feedback, it becomes progressively less conservative.

In some embodiments, the selection process proceeds as follows. First, the system counts the numbers of artist, CD, and track nodes that have scores greater than a constant threshold. In one implementation, the threshold is 0.2. As a result, the system knows how many artists, CDs, and tracks the user "likes." These counts are assigned to variables *artistCount, CDCount, and trackCount,* respectively.

Each preset has a *conservatismThrottle* variable 1215 that determines how much risk the system is willing to take in selecting a track that has a relatively lower score. The *conservatismThrottle* is bounded, for instance to the range [0.5, 7.5], and is adjusted whenever certain feedback events occur. If any of these adjustments would cause the throttle to exceed its threshold, it is set to the maximum or minimum value, as appropriate.
(1) When the "Rate -" key is pressed, the throttle is multiplied by 10.0 which has the effect of reducing the risk to be taken in selecting the next track and reflects the notion that it is desirable not to take too great a risk in a context in which the user is already at least mildly dissatisfied.
(2) When the "Next track" button is pressed in the appropriate window, the throttle is multiplied by 1.5 which reduces the risk to be taken but not by nearly as much as when the rate - key is pressed.
(3) When a track completes successively, it is multiplied by 0.9, thus increasing the risk to be taken in light of the success of the prior track selection.
(4) Finally, when the system selects a track whose score is less than a constant threshold (e.g., 0.2), the throttle is multiplied by 1.5 which increases the risk to be taken by a larger amount.

Note that "Rate +" and "Volume +" do not affect the throttle.

To choose a track for playback, a temporary variable, *totalLikelihood* is zeroed. Then, each track node is visited, in arbitrary order. A variable *score* is set to its raw*Score*/*weight*, as described previously. Then, if the track's *lastPlayedAtIndex* is not equal to -1, it is converted into a distance, as follows (where the percent symbol indicates a modulus operation):
distance = (globalPlayIndex - lastPlayedAtIndex) % 1024

If the distance is less than the track count (calculated above), then a penalty is applied to the *score:*
score -= 2.0*(1.0 - trackDistance / trackCount)

Similarly, the track's CD node and artist node are examined, and if their distances are less than the CD count and artist count respectively, further penalties are applied:
score -= 0.6*(1.0 - CDDistance/CDCount)
score -= 0.4*(1.0 - artistDistance/artistCount)

At this point, *score* for a given node represents the average feedback it has received, penalized if the track, CD or artist has been recently played. Now, *score* is converted into a likelihood value by the following, where pow(x, y) raises x to the y power:
likelihood = pow(10.0, score * conservatismThrottle)
The exact form of this function does not matter, but the ratio of two likelihoods for two different scores L1/L2, where Score1>Score2, should increase for larger values of conservatismThrottle, and decrease for smaller values, i.e., the function exhibits expansive nonlinearity. Next, *likelihood* is added into a local variable *totalLikelihood,* and a random number in the range [0,1) is generated. If the random number multiplied by *totalLikelihood* is less than *partialLikelihood,* the track being considered is tracked in local variable *currentBestChoice.*

This process is repeated for each track. At the end of the process, the system selects the track represented by *currentBestChoice* to play. It is guaranteed that a track will be selected, and the probability of each track being chosen is equal to its *likelihood* value divided by the sum of the *likelihood* values of all the track nodes.

### Suggestions for future purchases

After a user has used the selection system for a sufficient period of time, the scoring values of the nodes in the graph will correlate well with how well the user likes the various groups of tracks. Score values close to +1 indicate a strong preference, and score values close to -1 indicate strong dislike.

The system could be extended to temporarily insert data about CDs that the user does not actually own into the graph. The information would be derived from one of the external metadata sources previously described. Once inserted into the graph, the CDs' score could be calculated, using values inherited from the CDs' parent nodes. If the CD receives a high score, the system could recommend that the user purchase the CD. Following the recommendation, the CD data would be removed from the system's graph.

### Suggesting items to delete

The selection system utilizes a finite-capacity storage mechanism. At some point, it is likely that the system's storage capacity will be exhausted. When this happens, the system could list the tracks or CDs with the lowest score/weight values, and suggest that these be deleted.

### Pre-seeding

The system may permit the user to "pre-seed" the feedback in the stored tracks graph with preference data. For instance, while in search mode, the user could indicate to the system that he or she likes or dislikes an entire artist, album, or genre. The feedback could then be applied directly to the appropriate node in the stored tracks graph. In these examples, pre-seeding merely sets initial values for the nodes; they would continue to be updated as described above in the normal course of track playback.

### Smart state recovery

The user may switch out of "automatic selection" mode for brief periods of time. For instance, the user may switch to the radio to check traffic or baseball scores. If the user switches back to "automatic selection" mode within a short amount of time (e.g., 1 hour), the system could restore its state, including short-term preference variables, current track information, and play history information, to be exactly as it was when "automatic selection" mode was suspended. After this time period, the system would behave as if it was just starting, by resetting the play list history and short term preference information.

### On-screen display.

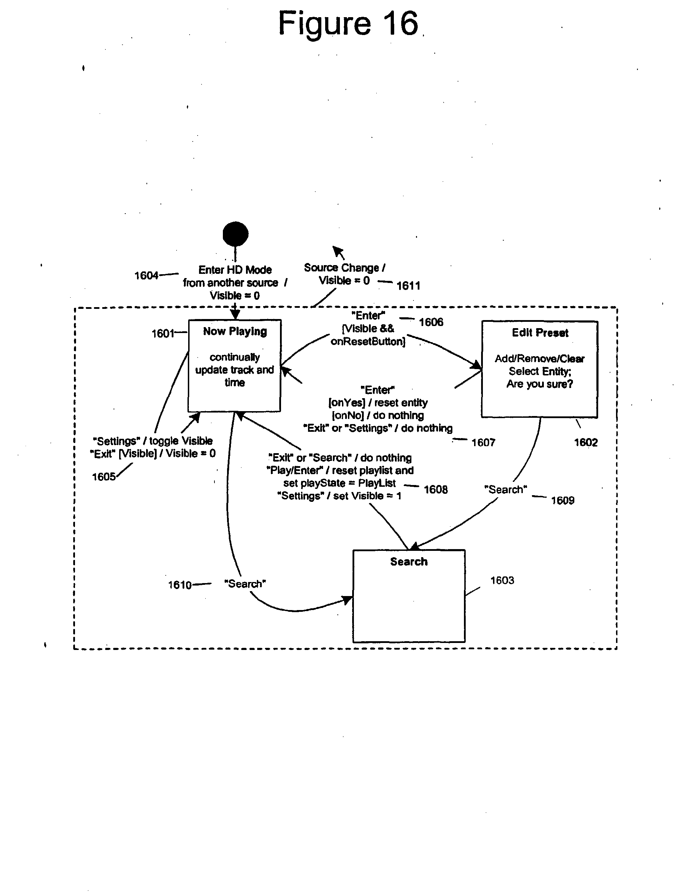

When the selection system is playing content from its hard drive (i.e., in any mode other than CD Mode or AM/FM Mode), its on-screen display is defined by the state diagram in figure 16. The OSD Module is activated 1604 when playing tracks from the system's hard disk. In the "now playing" state 1601, minimal information may be displayed. When the user presses 1605 a "settings" button 1801 (see figure 18), more detailed information about the currently-playing track appears or disappears (see figure 26). When the user presses 1606 the enter button, if detailed information about the currently-playing item is shown, the Edit Preset screen of the Edit Preset state 1602 appears (see figure 19). There, the user can add or remove an item from a preset (or, in the case of a user station, give the item positive or negative feedback), or entirely clear a preset (including the playlist and user stations). When the user presses Enter 1607, the system asks him or her for confirmation; if the user presses yes, the OSD sends a reset message and returns to the Now Playing state. If the user chooses no, or presses Exit or Settings instead of Enter, the system returns 1607 to the Now Playing state without doing anything.

From the Edit Preset and Now Playing states, when the user presses 1609, 1610 "Search," 1802 the system enters 1609 Search mode 1603 (see "Modes of Operation," above), allowing the user to search for tracks to play. From search mode, if the user presses Exit or Search, the module returns 1608 to Now Playing mode without doing anything. If the user presses Play or Enter, the module resets the playlist and sets the current play state to "PlayList." The OSD module returns 1608 to Now Playing mode. If the user presses the Settings button, the system displays detailed information about the currently playing item, and returns 1608 to the Now Playing state.

### Play States module

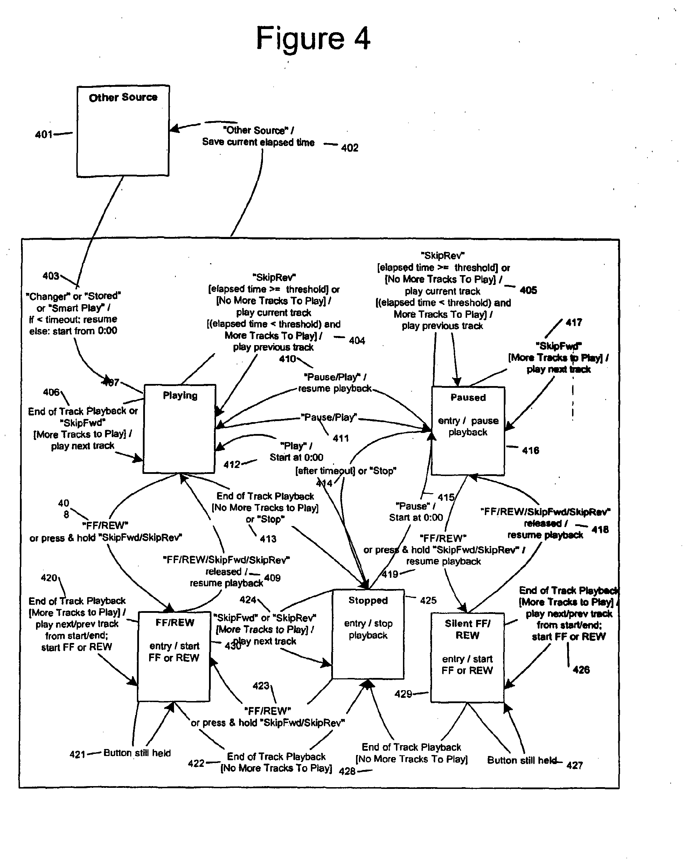

Some implementations of a play states module may operate as described in figure 4. The module enters 403 the Playing state 407 from a non-hard disk source 401 when the user presses Changer or Smart Play, or when a track is stored. If the system was last in Playing mode less than k minutes ago, where k is a constant (e.g., five minutes), the module resumes play from where it left off; otherwise it starts at the beginning. When the end of a track is reached, or the user presses skip track, the system advances to the next track, if there are remaining tracks, and returns 406 to Playing mode. If the user presses Previous track, and more than a pre-specified amount of time (e.g., 3 seconds) has elapsed since the beginning of the track, or if the system is already playing the first track, the system plays the current track from the beginning and returns 404 to Playing mode. If the amount of time the system has been playing is less than the threshold, and there are previous tracks, the system skips to the previous track and resumes 404 playing. If the user presses Pause/Play while in Playing mode, the module switches 411 to Paused mode 416, and pauses playback. If the end of the track is reached, and there are no more tracks to play, or if the user presses Stop, the module switches 413 to stopped mode.

While play is paused 416, if the user presses "Previous track," and playback has proceeded for more than a pre-specified amount of time (e.g., 3 seconds), or the module is already playing the first track, the module starts the current track from the beginning, but remains 405 in pause mode. If playback time is less than the threshold, and there are previous tracks, then the module switches to the previous track, and remains 405 in pause mode. If the user presses "Skip Track," and there is a next track, the system skips to the next track, and remains 417 in pause mode. If the user presses "Pause/Play" while the module is paused, the module switches 411 to Playing mode. If the user presses and holds Previous Track or Next Track or Fast Forward or Rewind while playback is paused, the module switches 419 to Silent FF/RW mode 429. After a pre-specified timeout (e.g., 5 minutes), or if the user presses stop, the module switches 414 to Stopped mode. If the user presses Play/Pause, the system resumes playback 410.

In Silent FF/RW mode 429, the module fast-forwards or rewinds silently. If it reaches the end of the track, and there are more tracks to play (either before, in the case of rewinding, or after, in the case of fast-forwarding, the current track), it skips to the end or beginning of the next or previous track, and resumes 426 silently rewinding or fast-forwarding. It continues 427 as long as the user holds down the button. If it reaches the end of the track, and there are no more tracks to play, the module switches 428 to "stopped" mode. When the user releases the button, the module returns 418 to the paused state. If the end of the track is reached, and there are no more tracks to play, the module enters 428 stop mode 425.

In stop mode 425, if the user presses Next Track or Previous track, and there is a next or previous track, the system skips to that track, and remains 424 in stop mode. If the user presses Play, the system begins to play 412 the current track from the beginning. If the user presses and holds fast forward, rewind, next track, or previous track, the system switches 423 to FF/Rewind mode 430. If the user presses pause, the system sets the elapsed time to be 0, and enters 415 pause mode for the current track.

While in Play mode, if the user presses and holds fast forward, rewind, previous track, or next track, the system switches 408 to FF/Rewind mode 430. The module audibly fast-forwards or rewinds the track. The module remains 421 in this mode while the button is held. If the module reaches the end of the track, and there are more tracks to play, it switches to the end of the previous track, if rewinding, or the beginning of the next track, if fast-forwarding, and continues 420 in the current state. When the user releases the button, the system switches 409 to play mode.

When a source button is pressed (such as tape, AM/FM radio, or CD/DVD), the system switches 402 to that mode, after saving the current elapsed time for the track.

### Variations

Although various implementations have been described, other embodiments are also within the scope of the following claims.

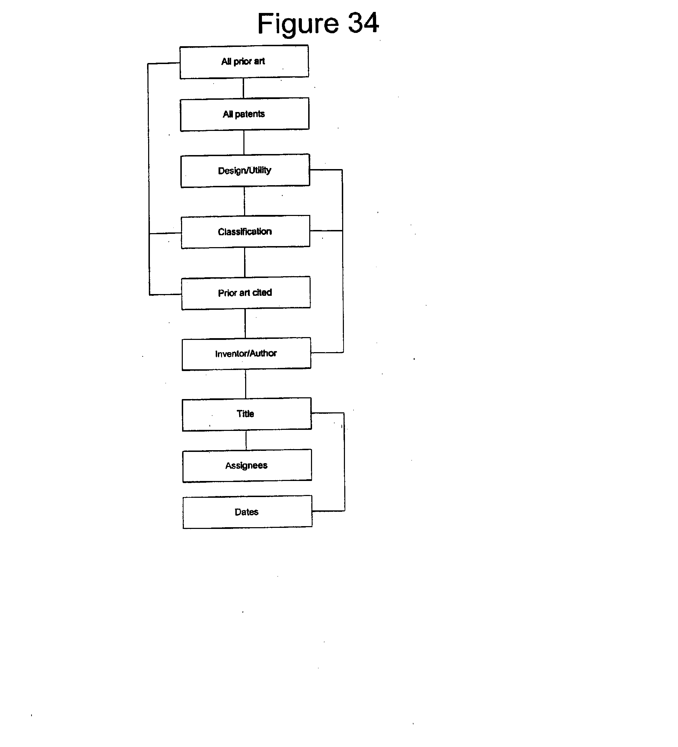

For example, any body of items that are to be searched or used and for which metadata that ties the items to one another hierarchically or otherwise could be subjected to a similar selection based on explicit and implicit preferences of a user. For example, in the case of a database of items, the user could phrase a conventional search. The system could produce a first "hit" from the search and display it to the user. The user could indicate his satisfaction or dissatisfaction with the first hit. The system could then rescore the items that resulted from the initial search, based on relationships indicated by the metadata. The system could then deliver another hit to the user in a manner similar to the way in which a next track is selected in the system described above for music. In the same way that the system described above adapts itself to deliver tracks of interest to the user, the database system could adapt itself to deliver hits of interest to the database searcher. A specific example of such a database could be used to search for patents in a patent database. The metadata that captures title, assignee, patent number, classification, prior art cited, whether it is a design or utility patent, who the inventor is, and other information could be used. Figure 34 provides an example structure of a stored tracks tree for such a variation.

Another example would be surfing the world wide web. Metadata associated with web pages could include IP addresses, titles, length, language, domain name, and other information. When a search produces a hit the user could indicate whether it suits his needs or not. Then the system could quickly adapt to deliver ever more relevant hits to the user's browser.

Although some examples have been discussed above, other implementations are also within the scope of the following claims.

## Claims

1. A method comprising
providing a user interface for controlling an audio system in a vehicle, the user interface exposing available features that provide and/or receive information concerning operation of the audio system, and altering the availability of at least one of the features depending on a motion state of the vehicle.

2. The method of claim 1 in which the available features both provide and receive information concerning operation of the audio system.

3. The method of claim 1 in which the operation of the audio system includes a choice of audio items to be played based on preferences of the user.

4. The method of claim 3 in which the user interface features include a way for the user to indicate his preferences about audio items.

5. The method of claim 1 in which fewer features are made available when the vehicle is moving than when it is stopped.

6. The method of claim 1 in which the features include sub-features related to user preferences for audio items to be played, and fewer of the user preference subfeatures are provided when the vehicle is moving than when it is stopped.

7. The method of claim 6 in which the sub-features related to user preferences include indicating a level of favorable or unfavorable reaction to an audio item and controlling configuration of software that uses the indications of preference to determine audio items

8. The method of claim 1 in which the features include displaying to the user, when the vehicle is not moving, a state of a configuration of the audio system.

9. The method of claim 1 in which the features include receiving information about whether or not a user likes an audio item being played.

10. The method of claim 1 in which the user interface comprises at least one of voice recognition and voice synthesis.

11. Apparatus comprising
an audio system in a vehicle, the audio system having
a user interface that includes input devices and/or output devices to provide and/or receive information concerning operation of the audio system, the level of information that is provided and/or received being altered depending on a motion state of the vehicle.

12. The apparatus of claim 11 in which the user interface includes both input devices and output devices that both provide and receive information.

13. The apparatus of claim 11 in which the audio system includes a selector to choose audio items to be played based on preferences of users expressed through the user interface.

14. The apparatus of claim 11 in which the user interface includes a way for the user to indicate his preferences about audio items.

15. The apparatus of claim 11 in which less information is made available when the vehicle is moving than when it is stopped.

16. The apparatus of claim 11 in which the level of information includes an indication of favorable or unfavorable reaction to an audio item .

17. The apparatus of claim 11 in which the level of information includes, when the vehicle is not moving, a state of a configuration of the audio system.

18. The apparatus of claim 11 in which the user interface comprises at least one of voice recognition and voice synthesis.

19. A medium bearing instructions capable of causing a machine to
provide a user interface for an audio system in a vehicle, the user interface making available features that provide and/or receive information concerning operation of the audio system, and alter the availability of at least one of the features depending on a motion state of the vehicle.

20. Apparatus comprising
a set of manually operable user controls for an audio, video, or multimedia system, the set including at least one transport control and at least one reaction control for the user to indicate a reaction to an audio, video, or multimedia item being played, the reaction control and the transport control being clustered within a space that is accessible by a human finger without hand motion.

21. Apparatus comprising four push buttons in a cluster, two of the buttons lying one above another for a user to indicate positive or negative reaction to an item of audio, video, or multimedia content being played, and the other two buttons lying side by side for the user to indicate that a next or previous item of audio, video, or multimedia content should be played next.

22. Apparatus comprising at least two controls for a user to indicate respectively different reactions to an item of audio, video, or multimedia content being played, the two controls providing different tactile impressions to the user.

23. Apparatus comprising stored presets representing reactions to items of audio, video, or multimedia content to be played by an audio, video, or multimedia system, and circuitry to receive a selection of one of the presets and to generate a probabilistic play sequence of items based on the selected preset.

24. A method comprising receiving from a user a selection from among presets representing reactions to items of audio, video, or multimedia content previously played by an audio, video, or multimedia system,
selecting an item to play based on the selected preset, and
modifying the preset based on a user reaction to the selected item.

25. Apparatus comprising a user interface for an audio, video, or multimedia system, the user interface including at least one control that enables a user to provide reaction information in connection with the playing of items of audio, video, or multimedia content, stored presets representing reactions of the user to items of audio, video, or multimedia content previously played by the audio, video, or multimedia system,
the reaction control also providing an additional function of enabling the user to apply the presets to the playing of items of audio, video, or multimedia content by the audio, video, or multimedia system.

26. A method comprising enabling a user to choose between at least two modes for selecting items to be played by an audio, video, or multimedia system, in one of the modes playing an item directly selected by the user, followed by items located sequentially after the first item, as defined by the recording medium, and in another mode playing items selected probabilistically by the audio, video, or multimedia system based on reactions of the user to previously played items.

27. Apparatus comprising a user interface to receive selections from a user of a mode for playing items of audio, video, or multimedia content, and an audio, video, or multimedia system connected to the user interface and configured to play, in one mode, an item directly selected by the user through the user interface, and those items that follow the selected items in the sequence defined by an original recording medium, and to play, in another mode, items selected probabilistically by the audio, video, or multimedia system based on reactions of the user to previously played items.

28. A medium bearing instructions capable of causing a machine to
enable a user to choose between two modes for selecting items to be played by an audio, video, or multimedia system,
in one of the modes, play an item directly selected by the user, followed by items located after the selected item, as defined by an original recording medium, and in the other of the modes, play items selected probabilistically by the audio, video, or multimedia system based on stored reaction information of the user derived in connection with previous playing of items of audio, video, or multimedia content.

29. A method comprising when operation of an audio, video, or multimedia system is initiated, automatically entering a mode in which items of audio, video, or multimedia content are played in an order determined by the audio, video, or multimedia system, the order being determined based on stored reaction information derived in connection with previous playing of items of audio, video, or multimedia content.
after the directly specified item has been played, reverting to the automatically entered mode.

30. A medium bearing instructions capable of causing a machine to
when operation of an audio, video, or multimedia system is initiated, automatically entering a mode in which items of content are played in an order determined by the system, the order being determined based on stored reaction information derived in connection with user responses to previous playing of items of content.

31. A method comprising
playing items of audio, video, or multimedia content on an audio, video, or multimedia system in a sequence of played items determined by one mode of operation, and
when the one mode of operation terminates, causing the audio, video, or multimedia system to automatically enter a mode in which items of content are played automatically in an order determined by the system, the order being determined based on stored reaction information derived in connection with user responses to previous playing of items of content.

32. A method comprising identifying a user of an audio, video, or multimedia system in connection with a session of use of the audio, video, or multimedia system by the user, and playing items of audio, video, or multimedia content on the system in a sequence determined probabilistically based on responses of the identified user to items played at a time prior to the session.

33. A method comprising enabling a user to indicate a reaction with respect to an item of audio, video, or multimedia content being played, and if the reaction is negative, terminating the playing of the item of audio, video, or multimedia content, and storing the negative reaction to use later.

34. A method comprising enabling a user to advance an audio, video, or multimedia system from a first item being played to a next item to be played, and advancing the audio, video, or multimedia system to the next item and storing the fact that the user has advanced the audio, video, or multimedia system for later use as an indicator of negative reaction to the first item.

35. A method comprising enabling a user to express any of more than one degree of negative reaction to an item being played by an audio, video, or multimedia system,
advancing the audio, video, or multimedia system to the next item, and
storing the degree of negative reaction that the user has expressed, for later use.

36. A method comprising
playing items of audio, video, or multimedia content from a mass storage medium of limited capacity,
storing items of audio, video, or multimedia content on the mass storage medium,
storing reaction information derived from a user based on the playing of items of content from the mass storage medium, and when the mass storage medium becomes full, identifying an item of audio, video, or multimedia content to be deleted from the mass storage medium based on the stored reaction information.

37. Apparatus comprising a transportable mass storage medium bearing stored items of audio, video, or multimedia content and scoring information for all of the items, the scoring information being based on a user's implicit or explicit reactions to the playing of one or more items of audio, video, or multimedia content from the mass storage medium.

38. A medium bearing instructions capable of causing a machine to
play items of audio, video, or multimedia content from a mass storage medium of limited capacity,
store items of audio, video, or multimedia content on the mass storage medium,
store reaction information derived from a user based on the playing of items of audio, video, or multimedia content from the mass storage medium, and when the mass storage medium becomes full, identify an item of audio, video, or multimedia content to be deleted from the mass storage medium based on the stored reaction information.

39. Apparatus comprising
an audio, video, or multimedia system including a medium storing items of audio, video, or multimedia content, a player to play a sequence of the items in accordance with reaction information provided by a user in connection with previously played items, and a user interface to interact with a user concerning the playing of items of audio, video, or multimedia content,
the audio, video, or multimedia system being configured to provide suggestions to a user through the user interface of compilations of audio, video, or multimedia items for purchase.

40. A method comprising
enabling a user to indicate a reaction with respect to an item of audio, video, or multimedia content being played by an audio, video, or multimedia system, using the reaction to influence a future sequence of items of audio, video, or multimedia content to be played, and
enabling the user to undo the indication of the reaction.

41. A method comprising
identifying to a user of an audio, video, or multimedia system an item of audio, video, or multimedia content that is going to be played,
enabling the user to cause the audio, video, or multimedia system not to play the item, storing information about the user's causing the item not to be played, and
using the stored information in connection with selecting items to be played.

42. A method comprising
playing items of audio, video, or multimedia content to a user, automatically selecting a sequence of the items to be played, the sequence reflecting reactions of the user,
adapting the sequence of items over a longer period of time based on the user's reactions indicated in connection with the playing of items of audio, video, or multimedia content, and temporarily adapting the sequence of items over a shorter period to reflect a short-term change of mood of the user as reflected in the indicated reactions.

43. A method comprising
playing items of audio, video, or multimedia content from a body of items of audio, video, or multimedia content using an audio, video, or multimedia system,
automatically selecting a next item to be played based on reaction information previously provided by a user in connection with the playing of items from the body of items, and each of the items of audio, video, or multimedia content having a finite, non-zero probability of being selected.

44. A method comprising
playing an item of audio, video, or multimedia content for a user from a body of items of audio, video, or multimedia content available on an audio, video, or multimedia system,
receiving reaction information from a user in connection with the playing of the item,
automatically updating, for each of the items in the body, the probability that the item will be selected for playing.

45. A method comprising in connection with playing an item of audio, video, or multimedia content on an audio, video, or multimedia system, receiving from a user an indication of a reaction to the item, and
enabling the user to indicate the reaction either explicitly, implicitly, or both.

46. A method comprising playing a sequence of items of audio, video, or multimedia content, the sequence being selected based on a probability distribution across a set of available items and on a risk factor representing a degree of risk to be taken in playing items that are assigned relatively lower probabilities in the distribution, and
altering the risk factor based on reactions indicated by a user.

47. A method comprising
storing a distribution of probabilities assigned to items of audio, video, or multimedia content belonging to an available body of audio, video, or multimedia content items, selecting items to be played on an audio, video, or multimedia system for a user, the selecting being based on the probability distribution, and altering the probability distribution dynamically based on reactions indicated by a user in connection with the playing of the items.

48. A method comprising
controlling the playing of items of audio, video, or multimedia content by an audio, video, or multimedia system to a user based on reactions previously indicated by a user in connection with the playing of items of audio, video, or multimedia content, the control being adapted dynamically beginning when the audio, video, or multimedia system is activated and without requiring pre-seeding of reaction information.

49. A method comprising
maintaining a history of items played automatically on an audio, video, or multimedia system,
maintaining scores for items belonging to a body of available items of audio, video, or multimedia content, and
updating the scores to reflect the history of items played, and
selecting items to be played probabilistically based on the scores.

50. Apparatus comprising a manually-operable control mounted in a position in a vehicle that permits a user to operate the control while holding a steering wheel of a vehicle, and circuitry coupled to the control and configured to interpret operation of the control as indicating a reaction of the user with respect to an item of audio, video, or multimedia material being performed for the user in the vehicle, and to use the reaction in determining items of audio, video, or multimedia material to be played in the future.

51. A method comprising
storing metadata associated with items to be selected from a body of items, the metadata implying relationships among the items, in response to a request for items, providing an item from the body of items, the provided item being one that conforms to the request,
receiving reaction information from a user indicating a reaction with respect to the provided item, and
selecting another item probabilistically from the selected body of items based on the reaction information.

52. A method comprising
adding new items of audio, video, or multimedia content to a body of content items,
interactively receiving from a user an indication of a categorization of each of the new items,
receiving reaction information from a user during the performance of items of the content, and selecting items for play based on the user reaction information and on the categorization information from the user.

53. A method comprising
selecting items of audio, video, or multimedia content from a body of content items for presentation to a user,
the selecting being based on a combination of reactions indicated by the user with respect to previously played items and on metadata that implies relationships among items of the content,
each of the items having a finite probability of being selected each time an item is selected.
